# EUROPEAN PATENT SPECIFICATION

(11) **EP 2 804 779 B1**
(45) Date of publication and mention of the grant of the patent: **08.11.2017**
(21) Application number: 13738002.8
(22) Date of filing: 18.01.2013
(51) Int. Cl.: B60L 11/18, H02J 7/00, H05B 3/00, B60L 1/02, B60L 11/00, H01M 10/42, H01M 10/615, H01M 10/657, H01M 16/00, H05B 1/02

(54) **ELECTRIC VEHICLE RUNNING CONTROL SYSTEM**
ELEKTRISCHES FAHRZEUGBETRIEBSSTEUERSYSTEM
SYSTÈME DE COMMANDE DE DÉPLACEMENT DE VÉHICULE ÉLECTRIQUE

(30) Priority: 18.01.2012 CN 201210015386
(43) Date of publication of application: 26.11.2014
(73) Proprietor: Shenzhen BYD Auto R&D Company Limited, Shenzhen, Guangdong 518118 (CN); BYD Company Limited, Shenzhen, Guangdong 518118 (CN)
(72) Inventor: HAN, Yaochuan, Shenzhen Guangdong 518118 (CN); FENG, Wei, Shenzhen Guangdong 518118 (CN); YANG, Qinyao, Shenzhen Guangdong 518118 (CN); LI, Xianyin, Shenzhen Guangdong 518118 (CN)
(74) Representative: Gulde & Partner
(86) International application number: PCT/CN2013/070644
(87) International publication number: WO 2013/107371

(56) References cited:
- EP-A1- 2 837 056
- EP-A1- 2 853 000
- EP-A1- 2 853 001
- EP-A1- 2 853 002
- EP-A1- 2 853 003
- WO-A2-2009/099342
- CN-A- 102 074 752
- CN-A- 102 074 752
- CN-A- 102 074 754
- CN-A- 102 082 306
- CN-A- 102 082 306
- CN-U- 201 667 552
- CN-U- 201 667 552
- CN-U- 201 994 390
- CN-U- 202 111 197
- CN-U- 202 541 450
- US-B1- 6 340 879
- US-B1- 6 340 879

## Description

### FIELD

The present disclosure relates to a power electrics field, and more particularly to an electric vehicle running control system.

### BACKGROUND

As electric vehicles need to run under complicated road conditions and environment conditions, an in-vehicle battery as a power of the electric vehicles needs to adapt to these conditions. Especially when the electric vehicles are in a low temperature environment, the in-vehicle battery needs to have excellent performances of discharging and charging in the low temperature environment and high input/output power. In general, a resistance and a polarization of the in-vehicle battery may be increased in the low temperature, which may reduce a capacity of the in-vehicle battery. Therefore, in order to keep the capacity of the in-vehicle battery in the low temperature, the electric vehicles are provided with a heating circuit of the in-vehicle battery.

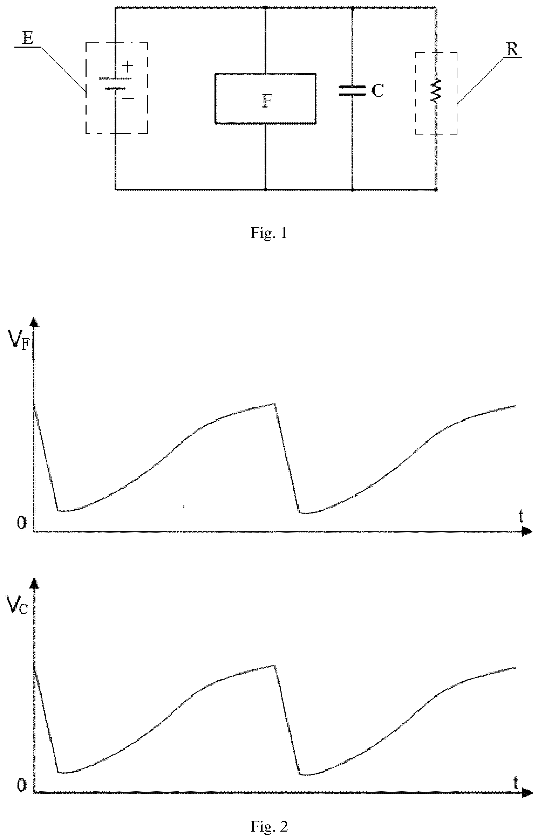

Fig. 1 is a schematic diagram of the electric vehicle running control system according to the prior art. As shown in Fig.1, the heating circuit F is connected with the in-vehicle battery E to form a heating loop. By controlling energy to flow between the in-vehicle battery E and the heating circuit F so as to heat a damping element in the heating circuit F, the in-vehicle battery E is heated, which increases the charging and discharging performance of the in-vehicle battery E.

However, if the in-vehicle circuit needs to be heated as the electric vehicle is running in the low temperature, as a load capacitor C also needs to supply power for a vehicle load R continuously, the heating circuit F and the load capacitor C will work simultaneously. Then, the working of the heating circuit F may cause the voltage of the in-vehicle battery E to fluctuate violently (even to become a negative value), and meanwhile the heating circuit may not work normally due to the influence of the loading circuit, as shown in Fig. 2. Fig. 2 shows schematic waveform charts of the heating circuit F and the load capacitor C in Fig. 1, in which V_{F} is a voltage of the heating circuit F, V_{C} is an output voltage of the load capacitor C. Prior art useful for understanding the present invention is disclosed in CN 102 082 306 A, CN 102 074 752 A and CN 201 667 552 U.

### SUMMARY

Since the efficiency of the prior art systems is reduced when functioning under conditions of low temperatures, there is a need to devise an electric vehicle control system having an increased working efficiency, especially regarding the heating circuit. The present disclosure is aimed to solve at least one of the problems, particularly defects that a heating circuit can not work normally due to an interference between a heating circuit and a load capacitor caused by heating during the running.

According to embodiments of the present disclosure, an electric vehicle running control system according to claim 1 is provided. The system comprises: a heating circuit connected with an in-vehicle battery to form a heating loop for heating the in-vehicle battery; a load capacitor; and a first current storage element connected with the load capacitor and the heating circuit respectively for reducing an interference between the heating circuit and the load capacitor.

The heating circuit comprises a damping element, a bidirectional switchgear, a second current storage element and a first charge storage element, wherein the damping element and the second current storage element are connected in series to form a first circuit, the bidirectional switchgear and the first charge storage element are connected in series to form a second circuit, one terminal of the first circuit is connected with a positive electrode of the in-vehicle battery, the other terminal of the first circuit is connected with one terminal of the second circuit and one terminal of the first current storage element, and the other terminal of the second circuit is connected with the load capacitor and a negative electrode of the in-vehicle battery. The system further comprises a heating circuit control module configured for controlling the heating circuit to connect with or disconnect from the in-vehicle battery by controlling the bidirectional switchgear to switch on or off.

The damping element is a resistor, the first current storage element and the second current storage element are inductors, and the first charge storage element is a capacitor.

The heating circuit further comprises an energy summing unit for summing an energy in the heating circuit and an energy in the in-vehicle battery after the bidirectional switchgear is switched off from a switched-on state, and the energy summing unit comprises a polarity reversing unit for reversing a voltage polarity of the first charge storage element after the bidirectional switchgear is switched off from the switched-on state.

In one embodiment, the damping element is an internal parasitic resistor of the in-vehicle battery, and the second current storage element is an internal parasitic inductor of the in-vehicle battery.

In another embodiment, the heating circuit further comprises an energy transferring unit for transferring an energy in the heating circuit to an energy storage element after the bidirectional switchgear is switched off from a switched-on state, and the energy transferring unit comprises an electric power recharging unit for transferring the energy in the heating circuit to the energy storage element after the bidirectional switchgear is switched off from the switched-on state.

In yet another embodiment, the heating circuit further comprises an energy summing and transferring unit for transferring a part of the energy in the heating circuit to an energy storage element after the bidirectional switchgear is switched off from a switched-on state, and then summing the remaining energy in the heating circuit and an energy in the in-vehicle battery.

In one embodiment, the energy summing and transferring unit further comprises an energy summing unit and an energy transferring unit, the energy transferring unit is configured for transferring the part of the energy in the heating circuit to the energy storage element after the bidirectional switchgear is switched off from the switched-on state, the energy summing unit is configured for summing the remaining energy in the heating circuit and the energy in the in-vehicle battery after the part of the energy is transferred by the energy transferring unit, the energy transferring unit comprises the electric power recharging unit for transferring the part of the energy in the heating circuit to the energy storage element after the bidirectional switchgear is switched off from the switched-on state, and the energy summing unit comprises the polarity reversing unit for reversing the voltage polarity of the first charge storage element after the part of the energy is transferred by the electric power recharging unit.

In another embodiment, the polarity reversing unit comprises: a third current storage element; a first switch, in which the first charge storage element, the third current storage element and the first switch are connected in series sequentially to form a loop, and the heating circuit control module is connected with the first switch, for reversing the voltage polarity of the first charge storage element by controlling the first switch to switch on; and a first unidirectional semiconductor element, in which the first unidirectional semiconductor element is connected in series between the first charge storage element and the third current storage element or between the third current storage element and the first switch.

In yet another embodiment, the polarity reversing unit further comprises: a second charge storage element;
and a first DC-DC module, in which the heating circuit control module is connected with the first DC-DC module for transferring an energy in the first charge storage element to the second charge storage element, and then reversely transferring an energy in the second charge storage element back to the first charge storage element, by controlling the first DC-DC module, so as to reverse the voltage polarity of the first charge storage element.

In this embodiment, the electric power recharging unit further comprises a second DC-DC module, and the heating circuit control module is connected with the second DC-DC module for transferring an energy in the first charge storage element to the in-vehicle battery, by controlling the second DC-DC module. The energy summing and transferring unit further comprises a third DC-DC module, and the heating circuit control module is connected with the third DC-DC module for transferring a part of an energy in the first charge storage element to the energy storage element, and then summing a remaining energy in the first charge storage element and the energy in the in-vehicle battery, by controlling the third DC-DC module.

In one embodiment, the system further comprises an energy limiting circuit for limiting a current flowing from the heating circuit to the in-vehicle battery.

In one embodiment, the bidirectional switchgear further comprises: a first unidirectional branch for realizing a flowing of an energy from the in-vehicle battery to the heating circuit; and a second unidirectional branch for realizing a flowing of an energy from the heating circuit to the in-vehicle battery. The heating circuit control module is connected with the first unidirectional branch or the second unidirectional branch for controlling the first unidirectional branch or the second unidirectional branch connected to be on or off.

In this embodiment, the energy limiting circuit comprises a fourth current storage element connected in series in the second unidirectional branch.

In one embodiment, the bidirectional switchgear further comprises a second switch, a second unidirectional semiconductor element and a third unidirectional semiconductor element, the second switch and the second unidirectional semiconductor element are connected in series to form the first unidirectional branch, the third unidirectional semiconductor element forms the second unidirectional branch, the heating circuit control module is connected with the second switch for controlling the first unidirectional branch to be on or off by controlling the second switch to switch on or off, and the fourth current storage element is connected with the third unidirectional semiconductor element in series.

In this embodiment, the bidirectional switchgear further comprises a third switch in the second unidirectional branch, the third switch is connected with the third unidirectional semiconductor element in series, the heating circuit control module is connected with the third switch for controlling the second unidirectional branch to be on or off by controlling the third switch to switch on or off, and the fourth current storage element is connected in series between the third unidirectional semiconductor element and the third switch.

In one embodiment, the heating circuit further comprises a fourth unidirectional semiconductor element, a fifth unidirectional semiconductor element, a fourth switch, and a fifth switch, a cathode of the fifth unidirectional semiconductor element is connected between the third switch and the fourth current storage element, an anode of the fifth unidirectional semiconductor element is connected to one end of the fifth switch, and the other end of the fifth switch is connected to a negative electrode of the in-vehicle battery; an anode of the fourth unidirectional semiconductor element is connected between the third unidirectional semiconductor element and the fourth current storage element, a cathode of the fourth unidirectional semiconductor element is connected to one end of the fourth switch, and the other end of the fourth switch is connected to the negative electrode of the in-vehicle battery; and the heating circuit control module is connected with the fourth switch and the fifth switch respectively for controlling the fourth switch and the fifth switch to switch on or off. The heating circuit control module is further configured for: controlling the second switch and the third switch to switch on to enable an energy to flow from the in-vehicle battery to the first charge storage element and to flow from the first charge storage element to the in-vehicle battery; switching off the third switch and switching on the fifth switch when a voltage applied to the first charge storage element is greater than a first predetermined voltage of the in-vehicle battery; and switching off the fifth switch and switching on the third switch and the fourth switch when a current flowing through the fourth current storage element is zero, to enable the voltage polarity of the first charge storage element to reverse. The heating circuit control module is further configured for: controlling the second switch and the third switch to switch on to enable an energy to flow from the in-vehicle battery to the first charge storage element and to flow from the first charge storage element to the in-vehicle battery; switching off the third switch and switching on the fifth switch when a voltage applied to the first charge storage element is less than or equal to a second predetermined voltage of the in-vehicle battery; switching off the fifth switch and switching on the third switch and the fourth switch when a current flowing through the fourth current storage element reaches a second predetermined current; switching off the fourth switch when the current flowing through the fourth current storage element reaches a first predetermined current, to enable an energy in the fourth current storage element to flow to the in-vehicle battery; and switching on the third switch and the fourth switch when the current flowing through the fourth current storage element is zero, to enable the voltage polarity of the first charge storage element to reverse.

According to the electric vehicle running control system of the present disclosure, the first current storage element is connected with the load capacitor to form a filter circuit. When the in-vehicle battery is heated as the electric vehicle is running, the filter circuit can filter a violent voltage fluctuation generated by the heating circuit and reduce an output voltage ripple of the load capacitor, which makes the output voltage of the load capacitor tend to be stable and avoids an influence on the heating circuit caused by the load capacitor. Thus, the heating circuit and the load capacitor may work simultaneously without interference with each other.

Additional aspects and advantages of the embodiments of the present disclosure will be given in part in the following description.

### BRIEF DESCRIPTION OF THE DRAWINGS

These and other aspects and advantages of the disclosure will become apparent and more readily appreciated from the following descriptions taken in conjunction with the drawings in which:
Fig. 1 is a schematic diagram of an electric vehicle running control system according to the prior art;
Fig. 2 shows schematic waveform charts of a heating circuit and a load capacitor in Fig. 1;
Fig. 3 is a schematic diagram of an electric vehicle running control system according to an embodiment of the present invention;
Fig. 4 is a schematic diagram of a heating circuit in the electric vehicle running control system according to an embodiment of the present invention;
Fig. 5 shows schematic waveform charts of the heating circuit and a load capacitor in Fig. 4;
Fig. 6 is a schematic diagram of the electric vehicle running control system according to a preferred embodiment of the present invention;
Fig. 7 is a schematic diagram of an embodiment of an energy summing unit in Fig. 6;
Fig. 8 is a schematic diagram of an embodiment of a polarity reversing unit in Fig.7;
Fig. 9 is a schematic diagram of an embodiment of the polarity reversing unit in Fig.7;
Fig. 10 is a schematic diagram of an embodiment of the polarity reversing unit in Fig.7;
Fig. 11 is a schematic diagram of an embodiment of a first DC-DC module in Fig. 10;
Fig. 12 is a schematic diagram of the electric vehicle running control system according to a preferred embodiment of the present invention;
Fig. 13 is a schematic diagram of the electric vehicle running control system according to a preferred embodiment of the present disclosure;
Fig. 14 is a schematic diagram of an embodiment of an electric power recharging unit in Fig.13;
Fig. 15 is a schematic diagram of an embodiment of a second DC-DC module in Fig. 14;
Fig. 16 is a schematic diagram of the electric vehicle running control system according to a preferred embodiment of the present invention;
Fig. 17 is a schematic diagram of a preferred embodiment of an energy summing and transferring unit in Fig. 16;
Fig. 18 is a schematic diagram of an embodiment of the heating circuit in the electric vehicle running control system according to the present invention;
Fig. 19 is a schematic diagram of a preferred embodiment of the heating circuit in the electric vehicle running control system according to the present invention;
Fig. 20 is a schematic diagram of a preferred embodiment of the heating circuit in the electric vehicle running control system according to the present invention;
Fig. 21 is a schematic diagram of the electric vehicle running control system according to a preferred embodiment of the present invention; and
Fig. 22 shows schematic waveform charts of the heating circuit and the load capacitor in Fig. 21.

### DETAILED DESCRIPTION

Embodiments of the present disclosure will be described in detail in the following descriptions, examples of which are shown in the accompanying drawings, in which the same or similar elements and elements having same or similar functions are denoted by like reference numerals throughout the descriptions. The embodiments described herein with reference to the accompanying drawings are explanatory and illustrative, which are used to generally understand the present disclosure. The embodiments shall not be construed to limit the present disclosure.

It should be noted that, unless otherwise specified, in the following description, the term "heating circuit controlling module" refers to any controller which can output control instructions (such as a pulse waveform) according to predetermined conditions or at predetermined times to control a heating circuit connected to switch on or off correspondingly, such as a PLC (Programming Logic Controller); the term " bidirectional switch" refers to any bidirectional switch that can realize on-off controlling according to electric signals or self-characteristics, such as a MOSFET (Metal Oxide Semiconductor Field Effect Transistor) or an IGBT (Insulated Gate Bipolar Transistor) with a reverse freewheeling diode; the term " charge storage element" refers to any device which can storage charges, such as a capacitor; the term "current storage element" refers to any device that can storage a current, such as an inductor; the term "forward direction" refers to a direction that energy flows from the in-vehicle battery to the heating circuit, the term "reverse direction" refers to a direction that energy flows from the heating circuit to the in-vehicle battery; the term "in-vehicle battery" comprises a primary battery (such as a dry battery or an alkaline battery) and a secondary battery (such as a lithium ion battery, a nickel cadmium battery, a nickel-metal hydride battery or a lead-acid battery); the term "damping element" refers to any device that consumes the energy by blocking the current flowing, such as a resistor; the term "heating loop" refers to a loop formed by the in-vehicle battery and the heating circuit.

In the following, the electric vehicle running control system according to the present disclosure will be described in detail with reference to the accompanied drawings.

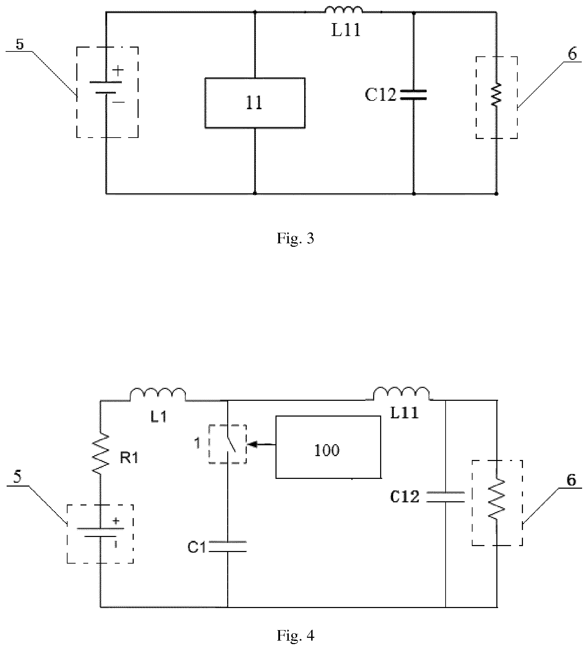

Fig. 3 is a schematic diagram of an electric vehicle running control system according to an embodiment of the present disclosure. As shown in Fig. 3, the system comprises a heating circuit 11 and a load capacitor C12. The heating circuit 11 is configured to connect with the in-vehicle battery 5 to form a heating loop. The load capacitor C12 is configured to supply energy to a vehicle load 6. The system further comprises a current storage element L11. The current storage element L11 is connected with the load capacitor C12 and the heating circuit 11 respectively.

In order to prolong a life time of the in-vehicle battery 5, the heating circuit 11 is connected with the in-vehicle battery 5 in a low temperature so that the in-vehicle battery 5 can be heated by the heating circuit 11. When a heating condition is reached, the in-vehicle battery 5 is heated, and when a stopping heating condition is reached, the heating circuit 11 is disconnected from the in-vehicle battery 5.

The current storage element L11 and the load capacitor C12 are connected in series to form an LC filter circuit. When the in-vehicle battery 5 is heated as the electric vehicle is running, the LC filter circuit can filter a violent voltage fluctuation generated by the heating circuit 11 and reduce an output voltage ripple of the load capacitor C12, which makes the output voltage of the load capacitor C12 tend to be stable and avoids an influence on the heating circuit 11 caused by the load capacitor C12. Thus, the heating circuit 11 and the load capacitor C12 may work simultaneously without interference with each other.

Fig. 4 is a schematic diagram of the heating circuit 11 in the electric vehicle running control system according to an embodiment of the present disclosure. As shown in Fig. 4, the heating circuit 11 comprises a damping element R1, a bidirectional switchgear 1, a current storage element L1 and a charge storage element C1. The damping element R1 and the current storage element L1 are connected in series to form a first part. The bidirectional switchgear 1 and the charge storage element C1 are connected in series to form a second part. One end of the first part is connected with a positive electrode of the in-vehicle battery 5, the other end of the first part is connected with one end of the second part and one end of the current storage element L11 respectively, and the other end of the second part is connected with the load capacitor C12 and a negative electrode of the in-vehicle battery 5 respectively. Specifically, one end of the damping element R1 is connected with the positive electrode of the in-vehicle battery 5, the other end of the damping element R1 is connected with one end of the current storage element L1, the other end of the current storage element L1 is connected with one end of the bidirectional switchgear 1 and one end of the current storage element L11 respectively, the other end of the current storage element L11 is connected with one end of the load capacitor C12, the other end of the load capacitor C12 is connected with one end of the charge storage element C1 and the negative electrode of the in-vehicle battery 5 respectively. Further, it should be understood that the example in Fig. 4 is only illustrative and not intended to limit the present disclosure. In other embodiments, the damping element R1 and the current storage element L1 may be exchanged, or the bidirectional switchgear 1 and the charge storage element C1 may be exchanged.

Furthermore, it should be noted that, considering different characters of different types of in-vehicle batteries, in the present disclosure, the "in-vehicle battery" may refer to an ideal battery which does not comprise an internal parasitic resistor or an internal parasitic inductor, or to an ideal battery in which both the internal parasitic resistor and the internal parasitic inductor are very small. The "in-vehicle battery" may also refer to a battery pack which comprises the internal parasitic resistor and the internal parasitic inductor. Therefore, it should be understood by the person skilled in the art that, when the "in-vehicle battery" refers to the ideal battery which does not comprise the internal parasitic resistor or the internal parasitic inductor, or to the ideal battery in which both the internal parasitic resistor and the internal parasitic inductor are very small, the damping element R1 is an external damping element of the in-vehicle battery, the current storage element L1 is an external current storage element of the in-vehicle battery; when the "in-vehicle battery" refers to the battery pack which comprises the internal parasitic resistor and the internal parasitic inductor, the damping element R1 may be the external damping element of the battery pack or the internal parasitic resistor of the battery pack, and similarly, the current storage element L1 may be the external current storage element of the battery pack or the internal parasitic inductor of the battery pack.

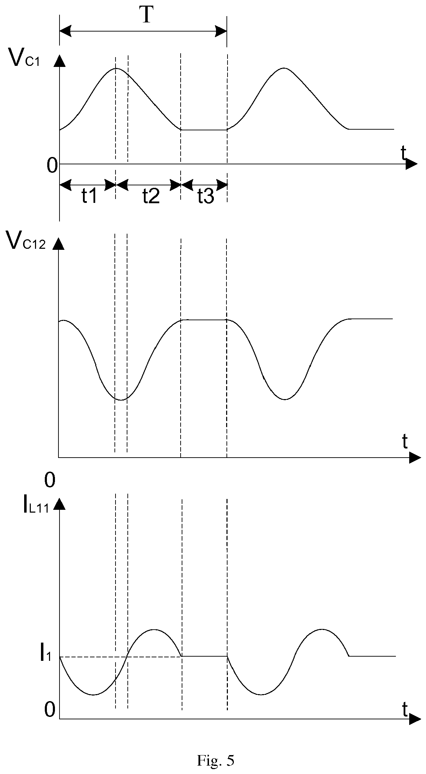

A working process of the electric vehicle running control system according to the present disclosure will be described as follows with reference to Figs. 4 and 5.

As shown in Fig. 4, the system further comprises a heating circuit control module 100. The heating circuit control module 100 is connected with the bidirectional switchgear 1, and is configured to control the heating circuit 11 to connect with or disconnect from the in-vehicle battery 5 by controlling the bidirectional switchgear 1 to switch on or off.

Thus, when the heating condition is reached, the heating circuit control module 100 controls the bidirectional switchgear 1 to switch on, and the in-vehicle battery 5 is connected with the heating circuit 11 to form the loop. The in-vehicle battery 5 discharges through the loop, that is, the charge storage element C1 is charged by the in-vehicle battery 5. When the current in the loop comes back to zero from a forward peak current, the charge storage element C1 starts to discharge though the loop, that is, the in-vehicle battery 5 is charged by the charge storage element C1. During the charging and discharging of the in-vehicle battery 5, both the forward current and the reverse current in the loop can flow through the damping element R1, and thus the in-vehicle battery 5 is heated by the heating of the damping element R1. When the stopping heating condition is reached, the heating circuit control module 100 controls the bidirectional switchgear 1 to switch off to make the heating circuit 11 stop working.

Fig. 5 shows schematic waveform charts of the heating circuit 11 and the load capacitor C12 in Fig. 4. In Fig. 5, T is a single working period of the electric running control system, V_{C1} is a voltage of the charge storage element C1 in the heating circuit 11, V_{C12} is a voltage of the load capacitor C12, IL₁₁ is a current flowing into the current storage element L11, I₁ is a current flowing from the load capacitor C12 to the vehicle load 6. It should be noted that, the raising and falling of the voltage V_{C12} depend on whether the current I_{L11} (i.e., the current flowing into the load capacitor C12) is greater than the current I₁. If the current I_{L11} is greater than the current I₁, the voltage V_{C12} raises; if the current I_{L11} is less than the current I₁, the voltage V_{C12} falls; and if the current I_{L11} is equal to the current I₁, the voltage V_{C12} keeps constant. The working process of the electric vehicle running control system in Fig.4 during the single period T is as follows.
a) During the running of the electric vehicle, if the in-vehicle battery 5 needs to be heated, the heating circuit control module 100 controls the bidirectional switchgear 1 to switch on, and the heating circuit 11 is connected with the in-vehicle battery 5 to form a heating loop. The in-vehicle battery 5 discharges through the heating circuit 11, that is, the in-vehicle battery 5 the first charge storage element C1 in the heating circuit 11, and the voltage V_{C1} of the charge storage element C1 raises. Meanwhile, the in-vehicle battery 5 also charges the load capacitor C12 through the current storage element L11, and the vehicle load 6 works with the energy provided by the load capacitor C12. At this time, as the current I_{L11} flowing into the current storage element L11 is less than the current I₁ flowing from the load capacitor C12 to the vehicle load 6, the output voltage V_{C12} of the load capacitor C12 falls, as a time period t1 shown in Fig. 5.
b) When the current in the heating loop comes back to zero from the forward peak current, the charge storage element C1 in the heating circuit 11 starts to charge the in-vehicle battery 5 through the heating loop, and the voltage V_{C1} of the charge storage element C1 falls. Meanwhile, the charge storage element C1 in the heating circuit 11 also charges the load capacitor C12 through the current storage element L11, and the vehicle load 6 works with the energy provided by the load capacitor C12. At this time, as the current I_{L11} flowing into the current storage element L11 is greater than the current I₁ flowing from the load capacitor C12 to the vehicle load 6, the output voltage V_{C12} of the load capacitor C12 raises, as a time period t2 shown in Fig. 5.
c) When the charge storage element C1 in the heating circuit 11 discharges to a lowest voltage, the heating circuit control module 11 controls the bidirectional switchgear 1 to switch off so as to disconnect the heating circuit 11 from the in-vehicle battery 5, and the voltage value V_{C1} of the charge storage element C1 keeps constant. At this time, the vehicle load 6 works with the energy provided by the load capacitor C12. As the current I_{L11} flowing into the current storage element L11 is equal to the current I₁ flowing from the load capacitor C12 to the vehicle load 6, the output voltage value V_{C12} of the load capacitor C12 keeps constant, as a time period t3 shown in Fig. 5.

As shown in Fig. 5, voltage waveforms tend to be stable, which is because the current storage element L11 is connected with the load capacitor C12 to form an LC filter circuit, which can filter a violent voltage fluctuation generated by the heating circuit 11 and reduce an output voltage ripple of the load capacitor C12.

With the electric vehicle running control system according to one embodiment of the present disclosure, by using the current storage element L11 and the load capacitor C12 to form the LC filter circuit, when the in-vehicle battery is heated as the vehicle is running, the LC filter circuit can filter a negative voltage generated by the heating circuit 11 and improve the output voltage fluctuation of the load capacitor C12, which makes the output voltage of the load capacitor C12 tend to be stable and avoid an influence on the heating circuit 11 caused by the load capacitor C12. Thus, the heating circuit 11 and the load capacitor C12 can work simultaneously without interference with each other.

During the above heating, when the current flows back to the in-vehicle battery 5 from the heating circuit 11, the energy in the charge storage element C1 will not totally flow back to the in-vehicle battery 5, and a part of the energy remains in the charge storage element C1, which finally makes the voltage of the charge storage element C1 approach or equal to that of the in-vehicle battery 5, and thus resulting in that the energy can not flow from the in-vehicle battery 5 to the charge storage element C1, which is disadvantageous for a cycle operation of the heating circuit 11.

Thus, in preferred embodiments of the present disclosure, the system is further provided with additional units that sum the energy in the charge storage element C1 and the energy in the in-vehicle battery 5 and transfer the energy in the charge storage element C1 to other energy storage elements. At a certain time, the bidirectional switchgear 1 is switched off, and the energy in the charge storage element C1 is summed or transferred.

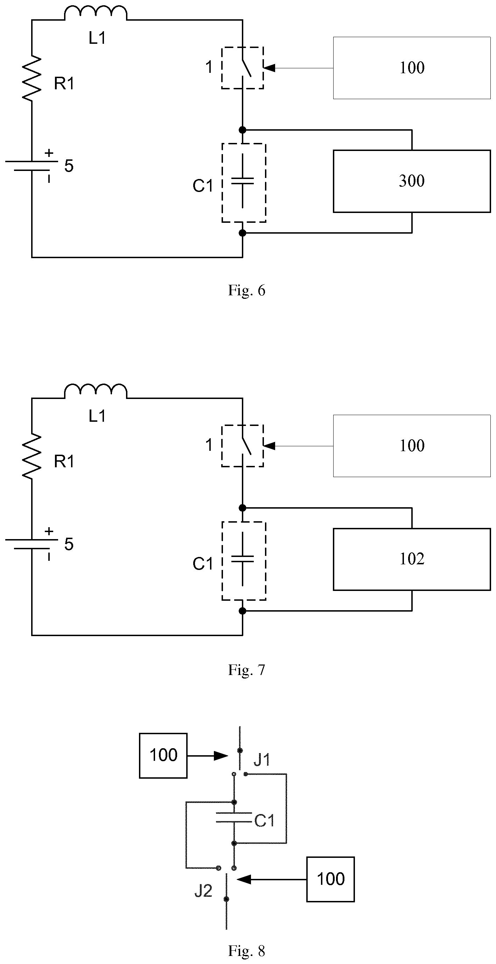

Fig. 6 is a schematic diagram of the electric vehicle running control system according to a preferred embodiment of the present disclosure. As shown in Fig. 6, the heating circuit 11 further comprises an energy summing unit 300. The energy summing unit 300 is connected with a path formed with the current storage element L1 and the charge storage element C1, and is configured to sum the energy in the heating circuit 11 and the energy in the in-vehicle battery 5 after the bidirectional switchgear 1 is switched off from a switched-on state. The makes the in-vehicle battery 5 able to charge the energy summed into the charge storage element C1 after the bidirectional switchgear 1 is switched on again, which increases a working efficiency of the heating circuit 11.

Fig. 7 is a schematic diagram of an embodiment of the energy summing unit 300. As shown in Fig. 7, the energy summing unit 300 comprises a polarity reversing unit 102. The polarity reversing unit 102 is connected with the path formed with the current storage element L1 and the charge storage element C1, and is configured to reverse a voltage polarity of the charge storage element C1 after the bidirectional switchgear 1 is switched off from the switched-on state. As the voltage polarity of the charge storage element C1 after polarity reversing and the voltage polarity of the in-vehicle battery 5 are serially summed up, when the bidirectional switchgear 1 is switched on again, the energy in the charge storage element C1 can be summed with the energy in the in-vehicle battery 5.

Fig. 8 is a schematic diagram of an embodiment of the polarity reversing unit 102. As shown in Fig. 8, the polarity reversing unit 102 comprises a single-pole double-throw switch J1 and a single-pole double-throw switch J2. The single-pole double-throw switch J1 is located at both ends of the charge storage element C1. A lead-in wire of the single-pole double-throw switch J1is connected in the heating circuit 11, a first lead-out wire of the single-pole double-throw switch J1 is connected with a first pole plate of the charge storage element C1, and a second lead-out wire of the single-pole double-throw switch J1 is connected with a second pole plate of the charge storage element C1. The single-pole double-throw switch J2 is located at both ends of the charge storage element C1. A lead-in wire of the single-pole double-throw switch J2 is connected in the heating circuit 11, a first lead-out wire of the single-pole double-throw switch J2 is connected with the second pole plate of the charge storage element C1, and a second lead-out wire of the single-pole double-throw switch J2 is connected with the first pole plate of the charge storage element C1. The heating circuit control module 100 is connected with the single-pole double-throw switch J1 and the single-pole double-throw switch J2 respectively, for reversing the voltage polarity of the charge storage element C1 by changing respective connection relations between the lead-in wire and the lead-out wires of the single-pole double-throw switch J1 and the single-pole double-throw switch J2.

According to the above embodiment, the respective connection relation between the lead-in wire and the lead-out wires of the single-pole double-throw switch J1 and the single-pole double-throw switch J2 can be preset in such a way: when the bidirectional switchgear 1 is switched on, the lead-in wire of the single-pole double-throw switch J1 is connected with the first lead-out wire of the single-pole double-throw switch J1, and the lead-in wire of the single-pole double-throw switch J2 is connected with the first lead-out wire of the single-pole double-throw switch J2; and when the bidirectional switchgear 1 is switched off, with the control of the heating circuit control module 100, the lead-in wire of the single-pole double-throw switch J1 is switched to connect with the second lead-out wire of the single-pole double-throw switch J1 and the lead-in wire of the single-pole double-throw switch J2 is switched to connect with the second lead-out wire of the single-pole double-throw switch J2. Thus, the voltage polarity reversing of the charge storage element C1 is achieved.

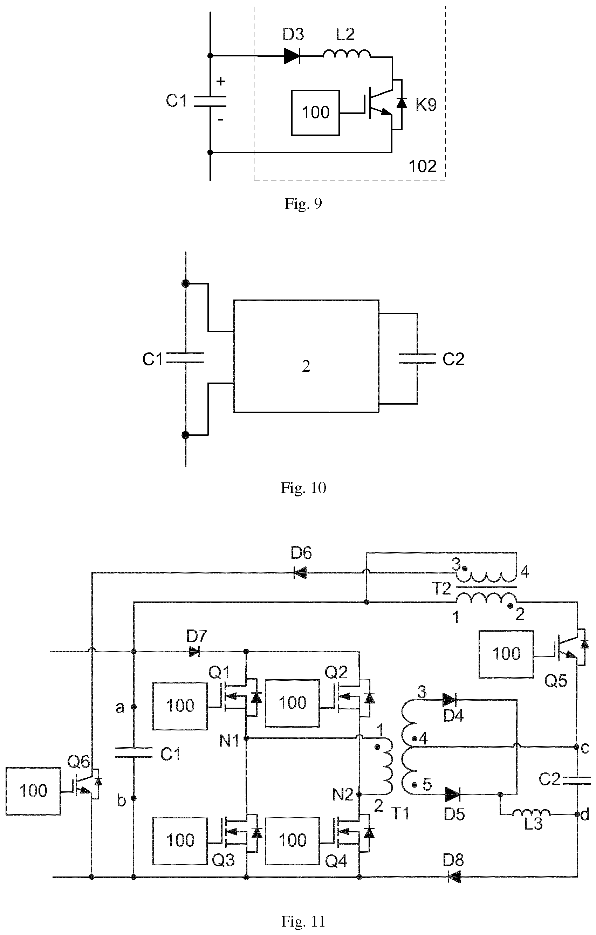

Fig. 9 is a schematic diagram of another embodiment of the polarity reversing unit 102. As shown in Fig. 9, the polarity reversing unit 102 comprises a unidirectional semiconductor element D3, a current storage element L2 and a switch K9. The charge storage element C1, the current storage element L2 and the switch K9 are connected in series sequentially to form a loop. The unidirectional semiconductor element D3 is connected in series between the charge storage element C1 and the current storage element L2 or between the current storage element L2 and the switch K9. The heating circuit 11 is also connected with the switch K9, for reversing the voltage polarity of the charge storage element C1 by controlling the switch K9 to switch on.

According to the above embodiment, when the bidirectional switchgear 1 is switched off, the switch K9 is controlled to switch on by the heating circuit control module 100. Accordingly, the charge element C1 forms an LC oscillation loop with the unidirectional semiconductor element D3, the current storage element L2 and the switch K9. The charge element C1 discharges through the current storage element L2, and the voltage polarity reversing of the charge storage element C1 is achieved when the current in the oscillation loop comes back to zero after passing through a positive half period.

Fig. 10 is a schematic diagram of yet another embodiment of the polarity reversing unit 102. As shown in Fig. 10, the polarity reversing unit 102 comprises a first DC-DC module 2 and a charge storage element C2. The first DC-DC module2 is connected with the charge storage element C1 and the charge storage element C2 respectively. The heating circuit control module 100 is also connected with the first DC-DC module 2 for transferring the energy in the charge storage element C1 to the charge storage element C2, and then reversely transferring energy in the charge storage element back C2 to the charge storage element C1, by controlling the first DC-DC module 2, so as to reverse the voltage polarity of the charge storage element C1.

The first DC-DC module 2 is a commonly used DC-DC (direct current to direct current) converting circuit for reversing the voltage polarity in the art. A circuit structure of the first DC-DC module 2 is not limited in the present disclosure. As long as the voltage polarity reversing of the charge storage element C1 can be achieved, a person skilled in the art can increase, replace or delete elements in the circuit according to actual requirements.

Fig. 11 is a schematic diagram of an embodiment of the first DC-DC module 2. As shown in Fig. 11, the first DC-DC module 2 comprises a bidirectional switch Q1, a bidirectional switch Q2, a bidirectional switch Q3, a bidirectional switch Q4, a first transformer T1, a unidirectional semiconductor element D4, a unidirectional semiconductor element D5, a current storage element L3, a bidirectional switch Q5, a bidirectional switch Q6, a second transformer T2, a unidirectional semiconductor element D6, a unidirectional semiconductor element D7 and a unidirectional semiconductor element D8.

In the embodiment, all the bidirectional switch Q1, the bidirectional switch Q2, the bidirectional switch Q3 and the bidirectional switch Q4 are MOSFETs, and the bidirectional switch Q5 and the bidirectional switch Q6 are IGBTs. A pin 1, a pin 4 and a pin 5 of the first transformer T1 are dotted terminals, and a pin 2 and a pin 3 of the second transformer T2 are dotted terminals.

An anode of the unidirectional semiconductor element D7 is connected with an end a of the capacitor C1, a cathode of the unidirectional semiconductor element D7 is connected with drains of the bidirectional switch Q1 and the bidirectional switch Q2 respectively, a source of the bidirectional switch Q1 is connected with a drain of the bidirectional switch Q3, a source of the bidirectional switch Q2 is connected with a drain of the bidirectional switch Q4, both the sources of the bidirectional switch Q3 and the bidirectional switch Q4 are connected with an end b of the capacitor C1, and thus a full bridge circuit is formed, in which the voltage polarity of the end a of the capacitor C1 is positive, and the voltage polarity of the end b is negative.

Further, in the full bridge circuit, the bidirectional switch Q1 and the bidirectional switch Q2 are upper bridge arms, the bidirectional switch Q3 and the bidirectional switch Q4 are lower bridge arms. The full bridge circuit is connected with the charge storage element C2 through the first transformer T1. The pin 1 of the first transformer T1 is connected with a first node N1, a pin 2 of the first transformer T1 is connected with a second node N2, a pin 3 and the pin 5 of the first transformer T1 are connected with anodes of the unidirectional semiconductor element D4 and the unidirectional semiconductor element D5 respectively. The cathodes of the unidirectional semiconductor element D4 and the unidirectional semiconductor element D5 are connected with one end of the current storage element L3, the other end of the current storage element L3 is connected with an end d of the charge storage element C2. The pin 4 of the first transformer T1 is connected with an end c of the charge storage element C2, the anode of the unidirectional semiconductor element D8 is connected with the end d of the charge storage element C2, and the cathode of the unidirectional semiconductor element D8 is connected with the end b of the charge storage element C1. At this time, the voltage polarity of the end c of the charge storage element C2 is negative, and the voltage polarity of the end d is positive.

In Fig. 11, the end c of the charge storage element C2 is connected with an emitter of the bidirectional switch Q5, a collector of the bidirectional switch Q5 is connected with the pin 2 of the second transformer T2, the pin 1 of the second transformer T2 is connected with the end a of the charge storage element C1, the pin 4 of the second transformer T2 is connected with the end a of the charge storage element C1, the pin 3 of the second transformer T2 is connected with the anode of the unidirectional semiconductor element D6, the cathode of the unidirectional semiconductor element D6 is connected with a collector of the bidirectional switch Q6, and an emitter of the bidirectional switch Q6 is connected with the end b of the charge storage element C2.

Further, the bidirectional switch Q1, the bidirectional switch Q2, the bidirectional switch Q3, the bidirectional switch Q4, the bidirectional switch Q5 and the bidirectional switch Q6 are controlled respectively by the heating circuit control module 100 to switch on or off.

In the following, a working process of the first DC-DC module 2 will be described.
1. After the bidirectional switchgear 1 is switched off, the heating circuit control module 100 controls the bidirectional switch Q5 and the bidirectional switch Q6 to switch off, controls the bidirectional switch Q1 and the bidirectional switch Q4 to switch on simultaneously so as to form a phase A, and controls the bidirectional switch Q2 and the bidirectional switch Q3 to switch on simultaneously so as to form a phase B. Then, the heating circuit control module 100 controls the phase A and the phase B to switch on alternately, so as to form the full bridge circuit.
2. When the full bridge circuit works, the energy in the charge storage element C1 is transferred to the charge storage element C2 through the first transformer T1, the unidirectional semiconductor element D4, the unidirectional semiconductor element D5 and the current storage element L3. At this time, the voltage polarity of the end c of the charge storage element C2 is negative, and the voltage polarity of the end d is positive.
3. The heating circuit control module 100 controls the bidirectional switch Q5 to switch on, and the charge storage element C1 forms a path with the charge storage element C2 through the second transformer T2 and the unidirectional semiconductor element D8. Thus, the energy in the charge storage element C2 is reversely transferred to the charge storage element C1, in which a part of the energy is stored in the second transformer T2. At this time, the heating circuit control module 100 controls the bidirectional switch Q5 to switch off and controls the bidirectional switch Q6 to switch on. Then, the energy stored in the second transformer T2 is transferred to the charge storage element C1 through the second transformer T2 and the unidirectional semiconductor element D6, so as to reversely charge the charge storage element C1. At this time, the voltage polarity of the end a of the charge storage element C1 is reversed to be negative, the voltage polarity of the end b of the charge storage element C1 is reversed to be positive. The voltage polarity reversing of the charge storage element C1 is achieved.

It should be understood by the person skilled in the art that, the above embodiments are not intended to limit methods for reversing the voltage polarity of the charge storage element C1. The person skilled in the art can use other structures to achieve the voltage polarity reversing of the charge storage element C1, such as a charge pump.

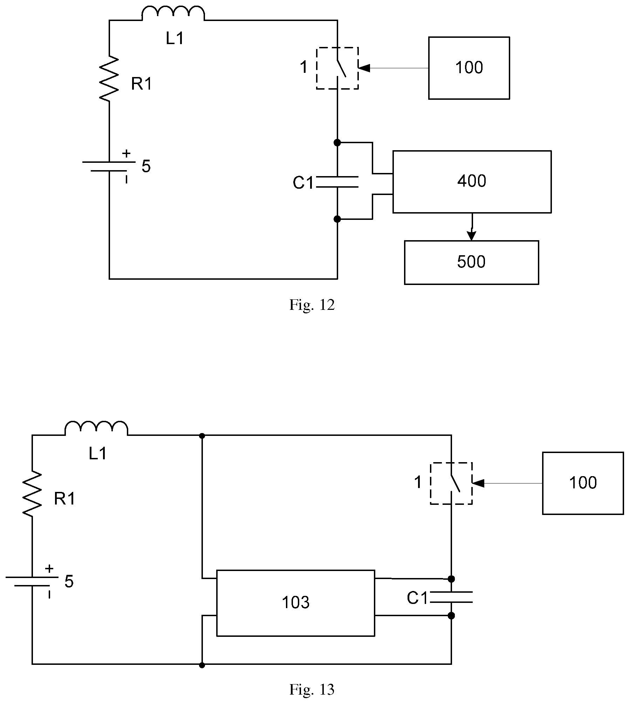

Fig. 12 is a schematic diagram of the electric vehicle running control system according to a preferred embodiment of the present disclosure. As shown in Fig. 12, the system further comprises an energy transferring unit 400. The energy transferring unit 400 is connected with a path formed with the current storage element L1 and the charge storage element C1. The energy transferring unit 400 is configured to transfer the energy in the heating circuit 11 to an energy storage element 500 after the bidirectional switchgear 1 is switched off from the switched-on state. The energy transferring unit 400 is used to recycle the energy in the heating circuit 11. The energy storage element 500 may be an external capacitor, a low temperature battery, a power grid or any other electric equipment.

Preferably, the energy storage element 500 is the in-vehicle battery 5, and the energy transferring unit 400 comprises an electric power recharging unit 103. The electric power recharging unit 103 is connected with the path formed with the current storage element L1 and the charge storage element C1, for transferring the energy in the heating circuit 11 to the in-vehicle battery 5 after the bidirectional switchgear 1 is switched off from the switched-on state, as shown in Fig. 13.

According to the present disclosure, when the energy in the heating circuit 11 is transferred to the in-vehicle battery 5 by the electric power recharging unit 103 after the bidirectional switchgear 1 is switched off, the energy transferred can be used circularly after the bidirectional switchgear 1 is switched on again, which increases the working efficiency of the heating circuit 11.

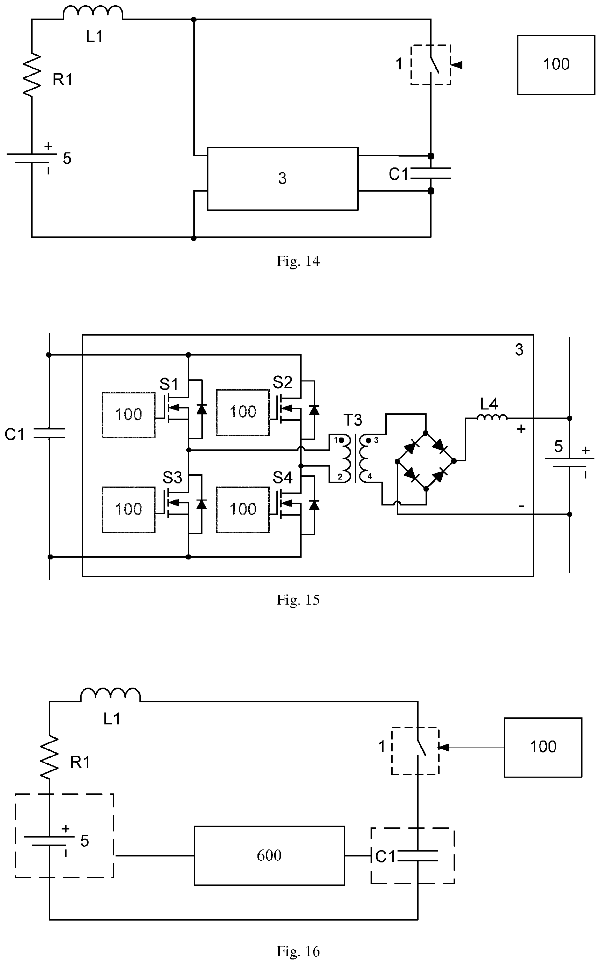

Fig. 14 is a schematic diagram of an embodiment of the electric power recharging unit 103. As shown in Fig. 14, the electric power recharging unit 103 comprises a second DC-DC module 3. The second DC-DC module 3 is connected with the charge storage element C1 and the in-vehicle battery 5 respectively. The heating circuit control module 100 is also connected with the second DC-DC module 3, for transferring the energy in the charge storage element C1 to the in-vehicle battery 5 by controlling the second DC-DC module 3.

The second DC-DC module 3 is a commonly used DC-DC converting circuit for transferring the energy in the art. A circuit structure of the second DC-DC module 3 is not limited in the present disclosure. As long as the energy transferring of the charge storage element C1 can be achieved, a person skilled in the art can increase, replace or delete the elements in the circuit according to actual requirements.

Fig. 15 is a schematic diagram of an embodiment of the second DC-DC module 3. As shown in Fig. 15, the second DC-DC module 3 comprises a bidirectional switch S1, a bidirectional switch S2, a bidirectional switch S3, a bidirectional switch S4, a third transformer T3, a current storage element L4 and four unidirectional semiconductor elements. In the embodiment, all the bidirectional switch S1, the bidirectional switch S2, the bidirectional switch S3 and the bidirectional switch S4 are MOSFETs.

A pin 1 and a pin 3 of the third transformer T3 are dotted terminals. The cathodes of two unidirectional semiconductor elements of the four unidirectional semiconductor elements are connected to form a group, and a connection point thereof is connected with the positive electrode of the in-vehicle battery 5 through the current storage element L4. The anodes of the other two unidirectional semiconductor elements are connected to form another group, and a connection point thereof is connected with the negative electrode of the in-vehicle battery 5. Junction points between the two groups are connected with the pin 3 and the pin 4 of the third transformer T3 respectively. Thus, a bridge rectifier circuit is formed.

Further, a source of the bidirectional switch S1 is connected with a drain of the bidirectional switch S3, a source of the bidirectional switch S2 is connected with a drain of the bidirectional switch S4, the drains of the bidirectional switch S1 and the bidirectional switch S2 are connected with the positive end of the charge storage element C1, and the sources of the bidirectional switch S3 and the bidirectional switch S4 are connected with the negative end of the charge storage element C1. Thus, a full bridge circuit is formed.

In the full bridge circuit, the bidirectional switch S1 and the bidirectional switch S2 are upper bridge arms, the bidirectional switch S3 and the bidirectional switch S4 are lower bridge arms. The pin 1 of the third transformer T3 is connected with a node between the bidirectional switch S1 and the bidirectional switch S3, a pin 2 of the third transformer T3 is connected with a node between the bidirectional switch S2 and the bidirectional switch S4.

Further, the bidirectional switch S1, the bidirectional switch S2, the bidirectional switch S3 and the bidirectional switch S4 are controlled respectively by the heating circuit control module 100 to switch on or off.

In the following, the working process of the second DC-DC module 3 will be described.
1. After the bidirectional switchgear 1 is switched off, the heating circuit control module 100 controls the bidirectional switch S1 and the bidirectional switch S4 to switch on simultaneously so as to form a phase A, and controls the bidirectional switch S2 and the bidirectional switch S3 to switch on simultaneously so as to form a phase B. Then, the heating circuit control module 100 controls the phase A and the phase B to switch on alternately, so as to form the full bridge circuit to work.
2. When the full bridge circuit works, the energy in the charge storage element C1 is transferred to the in-vehicle battery 5 through the third transformer T3 and the rectifier circuit, in which the rectifier circuit converts an input alternating current into a direct current and then output the direct current to the in-vehicle battery 5, so as to achieve the electric power recharging.

It should be understood by the person skilled in the art that, the above embodiments are not intended to limit methods for transferring the energy in the heating circuit 11 to the element storage elements. The person skilled in the art can use other structures to transfer the energy in the heating circuit 11, such as a charge pump or a transformer.

Fig. 16 is a schematic diagram of the electric vehicle running control system according to a preferred embodiment of the present disclosure. As shown in Fig. 16, the system further comprises an energy summing and transferring unit 600. The energy summing and transferring unit 600 is connected with the path formed with the current storage element L1 and the charge storage element C1, for transferring a part of the energy in the heating circuit 11 to the energy storage element 500 after the bidirectional switchgear 1 is switched off from the switched-on state, and then summing a remaining energy in the heating circuit 11 and the energy in the in-vehicle battery 5. The energy summing and transferring unit 600 may not only increase the working efficiency of the heating circuit 11, but also recycle the energy in the heating circuit 11.

The summing the remaining energy in the heating circuit 11 and the energy in the in-vehicle battery 5 is achieved by reversing the voltage polarity of the charge storage element C1. As the voltage polarity of the charge storage element C1 after reversing and the voltage polarity of the in-vehicle battery 5 are serially summed up, when the bidirectional switchgear 1 is switched on again, the energy in the in-vehicle battery 5 can be summed with the energy in the charge storage element C1.

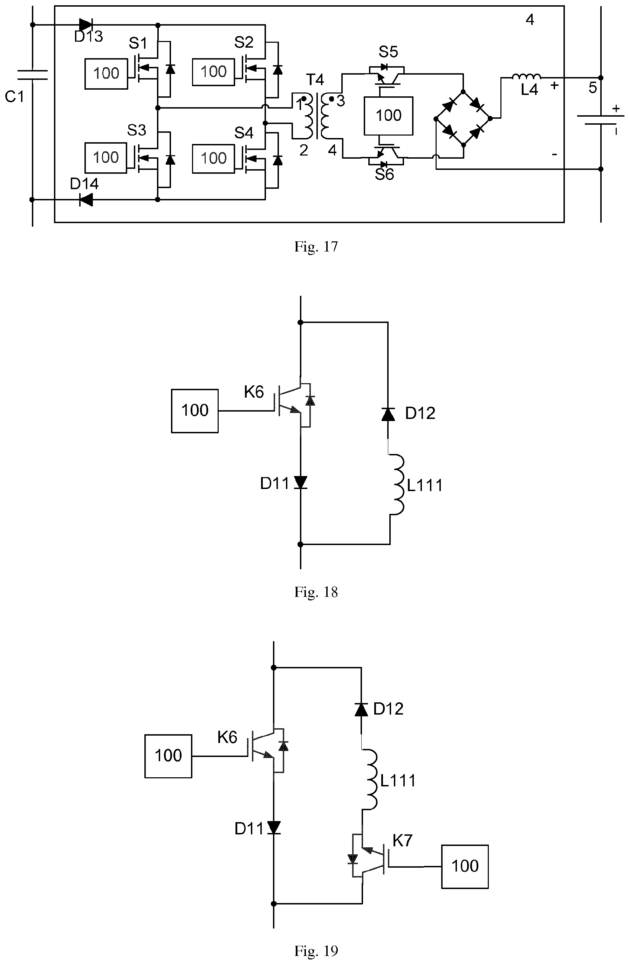

Fig. 17 is a schematic diagram of an embodiment of the energy summing and transferring unit 600. As shown in Fig. 17, the energy summing and transferring unit 600 comprises a third DC-DC module 4. The third DC-DC module 4 is connected with the charge storage element C1 and the in-vehicle battery 5 respectively. The heating circuit control module 100 is also connected with the third DC-DC module 4 for transferring a part of the energy in the charge storage element C1 to the energy storage element 500, and then summing a remaining energy in the charge storage element C1 and the energy in the in-vehicle battery 5, by controlling the third DC-DC module 4.

The third DC-DC module 4 is a commonly used DC-DC converting circuit for transferring the energy and reversing the voltage polarity in the art. A circuit structure of the third DC-DC module 4 is not limited in the present disclosure. As long as the energy transferring and voltage polarity reversing of the charge storage element C1 can be achieved, a person skilled in the art can increase, replace or delete the elements in the circuit according to actual requirements.

As shown in Fig. 17, the third DC-DC module 4 comprises a bidirectional switch S1, a bidirectional switch S2, a bidirectional switch S3, a bidirectional switch S4, a bidirectional switch S5, a bidirectional switch S6, a fourth transformer T4, a unidirectional semiconductor element D13, a unidirectional semiconductor element D14, a current storage element L4 and four unidirectional semiconductor elements. In the embodiment, the bidirectional switch S1, the bidirectional switch S2, the bidirectional switch S3 and the bidirectional switch S4 are MOSFETs, and the bidirectional switch S5 and the bidirectional switch S6 are IGBTs.

A pin 1 and a pin 3 of the fourth transformer T4 are dotted terminals. The cathodes of two unidirectional semiconductor elements of the four unidirectional semiconductor elements are connected to form a group, and a connection point thereof is connected with the positive electrode of the in-vehicle battery 5 through the current storage element L4. The anodes of the other two unidirectional semiconductor elements are connected to form another group, and the connection point thereof is connected with the negative electrode of the in-vehicle battery 5. Junction points between the two groups are connected with the pin 3 and the pin 4 of the third transformer T3 respectively through the bidirectional switch S5 and the bidirectional switch S6. Thus, a bridge rectifier circuit is formed.

Further, a source of the bidirectional switch S1 is connected with a drain of the bidirectional switch S3, a source of the bidirectional switch S2 is connected with a drain of the bidirectional switch S4, the drains of the bidirectional switch S1 and the bidirectional switch S2 are connected with the positive end of the charge storage element C1 through the unidirectional semiconductor element D13, and the sources of the bidirectional switch S3 and the bidirectional switch S4 are connected with the negative end of the charge storage element C1 through the unidirectional semiconductor element D14. Thus, a full bridge circuit is formed.

In the full bridge circuit, the bidirectional switch S1 and the bidirectional switch S2 are upper bridge arms, the bidirectional switch S3 and the bidirectional switch S4 are lower bridge arms. The pin 1 of the fourth transformer T4 is connected with a node between the bidirectional switch S1 and the bidirectional switch S3, a pin 2 of the fourth transformer T4 is connected with a node between the bidirectional switch S2 and the bidirectional switch S4.

Further, the bidirectional switch S1, the bidirectional switch S2, the bidirectional switch S3, the bidirectional switch S4, the bidirectional switch S5 and the bidirectional switch S6 are controlled respectively by the heating circuit control module 100 to switch on or off.

In the following, the working process of the third DC-DC module 4 will be described.
1. After the bidirectional switchgear 1 is switched off, when the electric power recharging to the charge storage element C1 is needed to achieve energy transferring, the heating circuit control module 100 controls the bidirectional switch S5 and the bidirectional switch S6 to switch on, controls the bidirectional switch S1 and the bidirectional switch S4 to switch on simultaneously so as to form a phase A, and controls the bidirectional switch S2 and the bidirectional switch S3 to switch on simultaneously so as to form a phase B. Then, the heating circuit control module 100 controls the phase A and the phase B to switch on alternately, so as to form the full bridge circuit to work.
2. When the full bridge circuit works, the energy in the charge storage element C1 is transferred to the in-vehicle battery 5 through the fourth transformer T4 and the rectifier circuit, in which the rectifier circuit converts the input alternating current into the direct current and then output the direct current to the in-vehicle battery 5 so as to achieve the electric power recharging.
3. When the polarity of the charge storage element C1 needs to be reversed so as to achieve the energy summing, the heating circuit control module 100 controls the bidirectional switch S5 and the bidirectional switch S6 to switch off, and controls the bidirectional switch S1 and the bidirectional switch S4 to switch on (otherwise, controls the bidirectional switch S2 and the bidirectional switch S3 to switch on). At this time, the energy in the charge storage element C1 flows reversely back to the negative end thereof through the positive end thereof, the bidirectional switch S1, a primary side of the fourth transformer T4 and the bidirectional switch S4, or the energy in the charge storage element C1 flows reversely back to the negative end thereof through the positive end thereof, the bidirectional switch S2, the primary side of the fourth transformer T4 and the bidirectional switch S3, in which the voltage polarity of the charge storage element C1 is reversed by a magnetic inductance of the primary side of the fourth transformer T4.

In another embodiment, the energy summing and transferring unit 600 may comprise the energy summing unit and the energy transferring unit. The energy transferring unit is connected with the path formed with the current storage element L1 and the charge storage element C1 for transferring a part of the energy in the heating circuit 11 to the energy storage element after the bidirectional switchgear 1 is switched off from the switched-on state. The energy summing unit is also connected with the path formed with the current storage element L1 and the charge storage element C1 for summing the remaining energy in the heating circuit 11 and the energy in the in-vehicle battery 5 after the energy transferring is conducted by the energy transferring unit.

It should be noted that, any energy summing unit 300 and energy transferring unit 400 described in the above embodiments may be used hereinto transfer and sum the energy in the charge storage element C1.

It should be understood by the person skilled in the art that the above embodiments are not intended to limit methods for transferring and then summing the energy in the heating circuit 11. The person skilled in the art can use other structures to transfer and sum the energy in the heating circuit 11, such as a charge pump.

According to another embodiment of the present disclosure, the system may further comprise an energy limiting circuit for limiting a current flowing from the heating circuit 11 to the in-vehicle battery 5. The bidirectional switchgear 1 may comprise a first unidirectional branch for realizing a flowing of the energy from the in-vehicle battery 5 to the heating circuit 11 and a second unidirectional branch for realizing a flowing of the energy from the heating circuit 11 to the in-vehicle battery 5. The heating circuit control module 100 is connected with the first unidirectional branch or the second unidirectional branch for controlling the first unidirectional branch or the second unidirectional branch connected to be on or off. Further, the energy limiting circuit may comprise a current storage element L111. The current storage element L111 is connected in series in the second unidirectional branch for limiting the current flowing to the in-vehicle battery 5.

Fig. 18 is a schematic diagram of an embodiment of the bidirectional switchgear 1. As shown in Fig. 18, the bidirectional switchgear 1 comprises a switch K6, a unidirectional semiconductor element D11 and a unidirectional semiconductor element D12. The switch K6 and the unidirectional semiconductor element D11 are connected in series to form the first unidirectional branch, the unidirectional semiconductor element D12 forms the second unidirectional branch. The heating circuit control module 100 is connected with the switch K6 for controlling the first unidirectional branch to be on or off by controlling the switch K6 to switch on or off, and the current storage element L111 is connected with the unidirectional semiconductor element D12 in series. In the bidirectional switchgear shown in Fig. 18, the heating is stated only by switching on the switch K6, and the heating is stopped only by switching off the switch K6.

Although the bidirectional switchgear 1 in Fig. 18 realizes the energy flowing forward and reversely along relatively independent branches, it can not realize the switching off the reversely flowing energy. To this end, the present disclosure provides another embodiment of the bidirectional switchgear 1.

Fig. 19 is a schematic diagram of another embodiment of the bidirectional switchgear 1. As shown in Fig. 19, the bidirectional switchgear 1 may further comprise a switch K7 in the second unidirectional branch. The switch K7 is connected with the unidirectional semiconductor element D12 in series. The heating circuit control module 100 is also connected with the switch K7 for controlling the second unidirectional branch to be on or off by controlling the switch K7 to switch on or off. Thus, as there are switches (i.e. the switch K6 and the switch K7) in both of the two unidirectional branches, the bidirectional switchgear 1 in Fig. 19 can switch off both the forward flowing and the reversely flowing of the energy.

In Fig. 19, the current storage element L111 is connected in series between the unidirectional semiconductor element D12 and the switch K7, so as to limit the current flowing to the in-vehicle battery 5.

According to embodiments of the present disclosure, when the in-vehicle battery needs to be heated, the heating circuit control module 100 controls the bidirectional switchgear 1 to switch on, the in-vehicle battery 5 is connected with the heating circuit 11 to form the loop, and the charge storage element Clis charged by the in-vehicle battery 5. When the current in the loop comes back to zero from the forward peak current, the charge storage element C1 starts to discharge, and the current flows back to the in-vehicle battery 5 from the charge storage element C1. Both the forward current and the reverse current in the loop flow through the damping element R1, and then the in-vehicle battery 5 is heated by the heating of the damping element R1. The above charging and discharging are implemented circularly. When the temperature of the in-vehicle battery 5 reaches the stopping heating condition, the heating circuit control module 100 controls the bidirectional switchgear 1 to switch off so as to make the heating circuit 11 stop working.

In order to save elements and reduce a size of the heating circuit 11, in a preferred embodiment, the current storage element L111 may also be used in the polarity reversing unit 102, so as to limit the current flowing from the heating circuit 11 to the in-vehicle battery 5 when the voltage polarity of the charge storage element C1 is reversed.

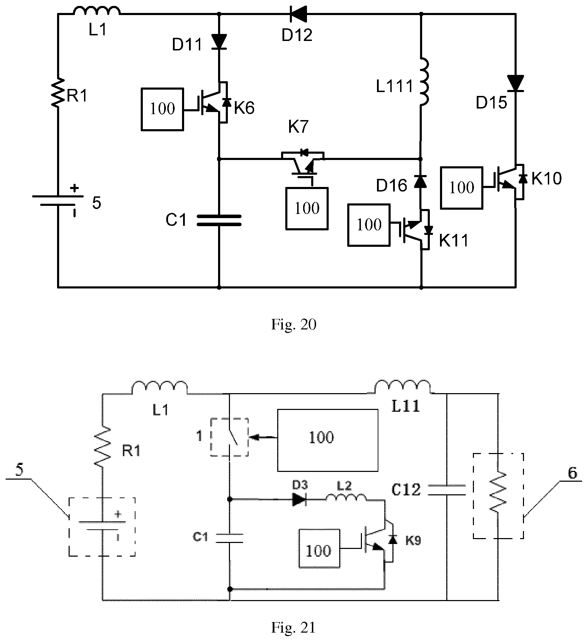

Fig. 20 is a schematic diagram of the heating circuit according to a preferred embodiment of the present disclosure. As shown in Fig. 20, the bidirectional switchgear 1 may use the structure of the bidirectional switchgear in Fig. 19, the current storage element L111 is connected in series between the unidirectional semiconductor element D12 and the switch K7 in the second unidirectional branch of the bidirectional switchgear 1. The heating circuit 11 further comprises a unidirectional semiconductor element D15, a unidirectional semiconductor element D16, a switch K10, and a switch K11. A cathode of the unidirectional semiconductor element D16 is connected between the switch K7 and the current storage element L111, an anode of the unidirectional semiconductor element D16 is connected to one end of the switch K11, and the other end of the switch K11 is connected to a negative electrode of the in-vehicle battery 5. An anode of the unidirectional semiconductor element D15 is connected between the unidirectional semiconductor element D12 and the current storage element L111, a cathode of the unidirectional semiconductor element D15 is connected to one end of the switch K10, and the other end of the switch K10 is connected to the negative electrode of the in-vehicle battery 5. The heating circuit control module 100 is also connected with the switch K10 and the switch K11 respectively for controlling the switch K10 and the switch K11 to switch on or off.

In the preferred embodiment, the heating circuit control module 100 may control the switch K6, the switch K7, the switch K10 and the switch K11 by many different on-off strategies, as long as the on-off strategy can both realize the energy flowing between the in-vehicle battery 5 and the charge storage element C1 and reverse the voltage polarity of the charge storage element C1.

For example, in one embodiment, when the in-vehicle battery 5 needs to be heated, the heating circuit control module 100 controls the switch K6 and the switch K7 to switch on to enable the energy to flow from the in-vehicle battery 5 to the charge storage element C1 and then to flow from the charge storage element C1 to the in-vehicle battery 5 (in which, the switch K6 and the switch K7 may be switched on simultaneously, or the switch K7 may be switched on after the switch K6 is switched off). When a voltage applied to the charge storage element C1 is greater than a first predetermined voltage of the in-vehicle battery 5, the heating circuit controlling module 100 switches off the switch K7, switches on the switch K11, and then switches off the switch K11 until a current flowing through the current storage element L111 is zero. And the heating circuit control module 100 switches on the switch K7 and the switch K10 to enable the voltage polarity of the charge storage element C1 to reverse.

In another example, when the in-vehicle battery 5 needs to be heated, the heating circuit control module 100 controls the switch K6 and the switch K7 to switch on to enable the energy to flow from the in-vehicle battery 5 to the charge storage element C1 and then to flow from the charge storage element C1 to the in-vehicle battery 5. When a voltage applied to the charge storage element C1 is less than or equal to a second predetermined voltage of the in-vehicle battery 5, the heating circuit control module 100 switches off the switch K7 and switches on the switch K11. When a current flowing through the current storage element L111 reaches a second predetermined current, the heating circuit control module 100 switches off the switch K11 and switches on the switch K7 and the switch K10. When the current flowing through the current storage element L111 reaches a first predetermined current, the heating circuit control module 100 switches off the switch K10 to enable energy in the current storage element L111 to flow to the in-vehicle battery 5. When the current flowing through the current storage element L111 is zero, the heating circuit control module 100 switches on the switch K7 and the switch K10 to enable the voltage polarity of the charge storage element C1 to reverse.

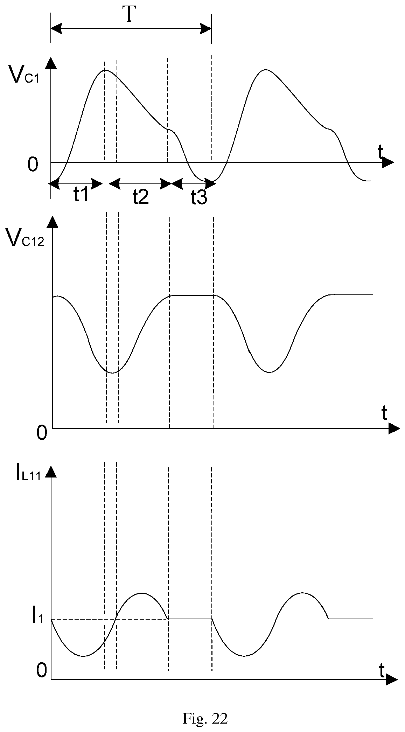

In the following, the working process of the electric vehicle running control system including the energy summing unit 300 will be described with reference to Fig. 21 and Fig. 22.

In the electric vehicle running control system shown in Fig. 21, the heating circuit 11 comprises the damping element R1, the bidirectional switchgear 1, the current storage element L1 and the charge storage element C1 connected in series. The heating circuit 11 is connected with the in-vehicle battery 5 to form a heating loop. The load capacitor C12 is connected with the vehicle load 6 in parallel for providing energy to the vehicle load 6. The current storage element L11 is connected with the load capacitor C12 and the heating circuit 11 respectively. The heating circuit control module 100 is connected with the bidirectional switchgear 1 for controlling the heating circuit 11 to connect with or disconnect from the in-vehicle battery 5 by controlling the bidirectional switchgear 1 to switch on or off. The unidirectional semiconductor element D3, the current storage element L2 and the switch K9 form the polarity reversing unit 102. The heating circuit control module 100 can control the switch K9 to switch on and off.

Fig. 22 shows schematic waveform charts of the heating circuit 11 and the load capacitor C2 in Fig. 21, in which T is a single working period of the electric vehicle running control system, V_{C1} is the voltage of the charge storage element C1 in the heating circuit 11, V_{C12} is the voltage of the load capacitor C12, I_{L11} is the current flowing into the current storage element L11, and I₁ is the current flowing from the load capacitor C12 to the vehicle load 6. It should be noted that the raising and falling of the voltage V_{C12} depend on whether the current I_{L11} (i.e., the current flowing into the load capacitor C12) is greater than the current I₁. If the current I_{L11} is greater than the current I₁, the voltage V_{C12} raises; if the current I_{L11} is less than the current I₁, the voltage V_{C12} falls; and if the current I_{L11} is equal to the current I₁, the voltage V_{C12} keeps constant. The working process of the electric vehicle running control system in Fig. 21 during the single period T is as follows.
a) During the running of the electric vehicle, if the in-vehicle battery needs to be heated, the heating circuit control module 100 controls the bidirectional switchgear 1 to switch on, and the heating circuit 11 is connected with the in-vehicle battery 5 to form a heating loop. The in-vehicle battery 5 discharges through the heating circuit 11, that is, the in-vehicle battery 5 charges the charge storage element C1 in the heating circuit 11, and the voltage V_{C1} of the charge storage element C1 raises. Meanwhile, the in-vehicle battery 5 also charges the load capacitor C12 through the current storage element L11, and the vehicle load 6 works with the energy provided by the load capacitor C12. At this time, as the current I_{L11} flowing into the current storage element L11 is less than the current I₁ flowing from the load capacitor C12 to the vehicle load 6, the output voltage V_{C12} of the load capacitor C12 falls, as a time period t1 shown in Fig. 22.
b) When the current in the heating loop comes back to zero from the forward peak current, the charge storage element C1 in the heating circuit 11 starts to charge the in-vehicle battery 5 through the heating loop, and the voltage V_{C1} of the charge storage element C1 falls. Meanwhile, the charge storage element C1 in the heating circuit 11 also charges the load capacitor C12 through the current storage element L11, and the vehicle load 6 works with the energy provided by the load capacitor C12. At this time, as the current I_{L11} flowing into the current storage element L11 is greater than the current I₁ flowing from the load capacitor C12 to the vehicle load 6, the output voltage V_{C12} of the load capacitor C12 raises, as a time period t2 shown in Fig. 22.
c) When the charge storage element C1 in the heating circuit 11 discharges to a lowest voltage, the heating circuit control module 11 controls the bidirectional switchgear 1 to switch off so as to disconnect the heating circuit 11 from the in-vehicle battery 5. Meanwhile, the heating circuit control module 100 controls the switch K9 to switch on to enable the polarity reversing unit 102 to work, that is, the charge storage element C1 discharges through the loop formed with the unidirectional semiconductor element D3, the current storage element L2 and the switch K9 so as to reverse the voltage polarity. At this time, the voltage V_{C1} of the charge storage element C1 falls to a negative value, and then the heating circuit control module 100 controls the switch K9 to switch off. At this time, as the vehicle load 6 is working with the energy provided by the load capacitor C12, the current I_{L11} flowing into the current storage element L11 is equal to the current I₁ flowing from the load capacitor C12 to the vehicle load 6, and thus the output voltage V_{C12} of the load capacitor C12 keeps constant, as a time period t3 shown in Fig. 22.

It can be seen clearly from Fig. 22 that, the voltage waveforms tend to be stable, this is because the current storage element L11 is connected with the load capacitor C12 to form an LC filter circuit, which can filter the violent voltage fluctuation generated by the heating circuit 11 and reduce an output voltage ripple of the load capacitor C12.

## Claims

1. An electric vehicle running control system, comprising:
a heating circuit (11) connected with an in-vehicle battery (5) to form a heating loop for heating the in-vehicle battery (5), a load capacitor (C12); and a first current storage element (L11) connected with the load capacitor (C12) and the heating circuit (11) respectively for reducing an interference between the heating circuit (11) and the load capacitor (C12),
wherein the heating circuit (11) comprises a damping element (R1), a bidirectional switchgear (1), a second current storage element (L1) and a first charge storage element (C1), wherein the damping element (R1) and the second current storage element (L1) are connected in series to form a first circuit, the bidirectional switchgear (1) and the first charge storage element (C1) are connected in series to form a second circuit, one terminal of the first circuit is connected with a positive electrode of the in-vehicle battery (5), the other terminal of the first circuit is connected with one terminal of the second circuit and one terminal of the first current storage element (L11), and the other terminal of the second circuit is connected with the load capacitor (C12) and a negative electrode of the in-vehicle battery (5), wherein the damping element (R1) is a resistor, the first current storage element (L11) and the second current storage element (L1) are inductors, and the first charge storage element (C1) is a capacitor;
a heating circuit control module (100) configured for controlling the heating circuit (11) to connect with or disconnect from the in-vehicle battery (5) by controlling the bidirectional switchgear (1) to switch on or off; **characterized in that** the heating circuit (11) further comprises an energy summing unit (300) for summing an energy in the heating circuit (11) and an energy in the in-vehicle battery (5) after the bidirectional switchgear (1) is switched off from a switched-on state, and the energy summing unit (300) comprises a polarity reversing unit (102) for reversing a voltage polarity of the first charge storage element (C1) after the bidirectional switchgear (1) is switched off from the switched-on state.

2. The electric vehicle running control system according to any claim 1, wherein the damping element (R1) is an internal parasitic resistor of the in-vehicle battery (5), and the second current storage element (L1) is an internal parasitic inductor of the in-vehicle battery (5).

3. The electric vehicle running control system according to any one of claims 1-2, wherein the heating circuit (11) further comprises an energy transferring unit (400) for transferring an energy in the heating circuit (11) to an energy storage element (500) after the bidirectional switchgear (1) is switched off from a switched-on state, and the energy transferring unit (400) comprises an electric power recharging unit (103) for transferring the energy in the heating circuit (11) to the energy storage element (500) after the bidirectional switchgear (1) is switched off from the switched-on state.

4. The electric vehicle running control system according to any one of claims 1-3, wherein the heating circuit (11) further comprises an energy summing and transferring unit (600) for transferring a part of the energy in the heating circuit (11) to an energy storage element (500) after the bidirectional switchgear (1) is switched off from a switched-on state, and then summing the remaining energy in the heating circuit (11) and an energy in the in-vehicle battery (5).

5. The electric vehicle running control system according to claim 4, wherein
the energy summing and transferring unit comprises (600) an energy summing unit (300) and an energy transferring unit (400),
the energy transferring unit (400) is configured for transferring the part of the energy in the heating circuit (11) to ane energy storage element (500) after the bidirectional switchgear (1) is switched off from the switched-on state,
the energy summing unit (300) is configured for summing the remaining energy in the heating circuit (11) and the energy in the in-vehicle battery (5) after the part of the energy is transferred by the energy transferring unit (400),
the energy transferring unit (400) comprises the electric power recharging unit (103) for transferring the part of the energy in the heating circuit (11) to the energy storage element (500) after the bidirectional switchgear (1) is switched off from the switched-on state, and
the energy summing unit (300) comprises the polarity reversing unit (102) for reversing the voltage polarity of the first charge storage element (C1) after the part of the energy is transferred by the electric power recharging unit (103).

6. The electric vehicle running control system according to any one of claims 1-5, wherein the polarity reversing unit (102) comprises:
a third current storage element (L2);
a first switch (K9), wherein the first charge storage element (C1), the third current storage element (L2) and the first switch (K9) are connected in series sequentially to form a loop, and the heating circuit control module (100) is connected with the first switch (K9), for reversing the voltage polarity of the first charge storage element (C1) by controlling the first switch (K9) to switch on; and
a first unidirectional semiconductor element (D3), wherein the first unidirectional semiconductor element (D3) is connected in series between the first charge storage element (C1) and the third current storage element (L2) or between the third current storage element (L2) and the first switch (K9).

7. The electric vehicle running control system according to any one of claims 4 - 6, wherein the polarity reversing unit comprises (102):
a second charge storage element (C2);
a first DC-DC module (2), wherein the heating circuit control module (100) is connected with the first DC-DC module (2) for transferring an energy in the first charge storage element (C1) to the second charge storage element (C2), and then reversely transferring an energy in the second charge storage element (C2) back to the first charge storage element (C1), by controlling the first DC-DC module (2), so as to reverse the voltage polarity of the first charge storage element (C1);
wherein the electric power recharging unit (103) comprises a second DC-DC module (3), and the heating circuit control module (100) is connected with the second DC-DC module (3) for transferring an energy in the first charge storage element (C1) to the in-vehicle battery (5), by controlling the second DC-DC module (3); and
wherein the energy summing and transferring unit (600) comprises a third DC-DC module (4), and the heating circuit control module (100) is connected with the third DC-DC module (4) for transferring a part of the energy in the first charge storage element (C1) to the energy storage element (500), and then summing the remaining energy in the first charge storage element (C1) and the energy in the in-vehicle battery (5), by controlling the third DC-DC module (4).

8. The electric vehicle running control system according to any one of claims 1-7, further comprising:
an energy limiting circuit for limiting a current flowing from the heating circuit (11) to the in-vehicle battery (5).

9. The electric vehicle running control system according to claim 8, wherein
the bidirectional switchgear (1) comprises a first unidirectional branch for realizing a flowing of an energy from the in-vehicle battery (5) to the heating circuit (11), and a second unidirectional branch for realizing a flowing of an energy from the heating circuit (11) to the in-vehicle battery (5),
the heating circuit control module (100) is connected with the first unidirectional branch or the second unidirectional branch for controlling the first unidirectional branch or the second unidirectional branch connected to be on or off; and
wherein the energy limiting circuit (100) comprises a fourth current storage element (L111) connected in series in the second unidirectional branch.

10. The electric vehicle running control system according to claim 9, wherein
the bidirectional switchgear (1) comprises a second switch (K6), a second unidirectional semiconductor element (D11) and a third unidirectional semiconductor element (D12),
the second switch (K6) and the second unidirectional semiconductor element (D11) are connected in series to form the first unidirectional branch, the third unidirectional semiconductor element (D12) forms the second unidirectional branch,
the heating circuit control module (100) is connected with the second switch (K6) for controlling the first unidirectional branch to be on or off by controlling the second switch (K6) to switch on or off,
the fourth current storage element (L111) is connected with the third unidirectional semiconductor element (D12) in series; and
wherein the bidirectional switchgear (1) further comprises a third switch (K7) in the second unidirectional branch, the third switch (K7) is connected with the third unidirectional semiconductor element (D12) in series, the heating circuit control module (100) is connected with the third switch (K7) for controlling the second unidirectional branch to be on or off by controlling the third switch (K7) to switch on or off, and the fourth current storage element (L111) is connected in series between the third unidirectional semiconductor element (D12) and the third switch (K7).

11. The electric vehicle running control system according to claim 10, wherein
the heating circuit (11) further comprises a fourth unidirectional semiconductor element (D15), a fifth unidirectional semiconductor element (D16), a fourth switch (K10) and a fifth switch (K11),
a cathode of the fifth unidirectional semiconductor element (D16) is connected between the third switch (K7) and the fourth current storage element (L111), an anode of the fifth unidirectional semiconductor element (D16) is connected to one end of the fifth switch (K11), and the other end of the fifth switch (K11) is connected to a negative electrode of the in-vehicle battery (5);
an anode of the fourth unidirectional semiconductor element (D15) is connected between the third unidirectional semiconductor element (D12) and the fourth current storage element (L111), a cathode of the fourth unidirectional semiconductor (D15) element is connected to one end of the fourth switch (K10), and the other end of the fourth switch (K10) is connected to the negative electrode of the in-vehicle battery (5);
the heating circuit control module (100) is connected with the fourth switch (K10) and the fifth switch (K11) respectively for controlling the fourth switch (K10) and the fifth switch (K11) to switch on or off;
wherein the heating circuit control module (100) is configured for:
controlling the second switch (K6) and the third switch (K7) to switch on to enable an energy to flow from the in-vehicle battery (5) to the first charge storage element (C1) and to flow from the first charge storage element (C1) to the in-vehicle battery (5);
switching off the third switch (K7) and switching on the fifth switch (K11) when a voltage applied to the first charge storage element (C1) is greater than a first predetermined voltage of the in-vehicle battery (5);
switching off the fifth switch (K11) and switching on the third switch (K7) and the fourth switch (K10) when a current flowing through the fourth current storage element (L111) is zero, to enable the voltage polarity of the first charge storage element (C1) to reverse; and
controlling the second switch (K6) and the third switch (K7) to switch on to enable an energy to flow from the in-vehicle battery (5) to the first charge storage element (C1) and to flow from the first charge storage element (C1) to the in-vehicle battery (5);
switching off the third switch (K6) and switching on the fifth switch (K11) when a voltage applied to the first charge storage element (C1) is less than or equal to a second predetermined voltage of the in-vehicle battery (5);
switching off the fifth switch (K11) and switching on the third switch (K7) and the fourth switch (K10) when a current flowing through the fourth current storage element (L111) reaches a second predetermined current;
switching off the fourth switch (K10) when the current flowing through the fourth current storage element (L111) reaches a first predetermined current, to enable an energy in the fourth current storage element (L111) to flow to the in-vehicle battery (5); and
switching on the third switch (K7) and the fourth switch (K10) when the current flowing through the fourth current storage element (L111) is zero, to enable the voltage polarity of the first charge storage element (C1) to reverse.

## Patentansprüche

1. Ein elektrisches Fahrzeugbetriebssteuersystem, aufweisend:
eine Heizschaltung (11), die mit einer fahrzeuginternen Batterie (5) verbunden ist, um einen Heizkreis zum Heizen der fahrzeuginternen Batterie (5) auszubilden, einen Lastkondensator (C12); und ein erstes Stromspeicherelement (L11), das jeweils mit dem Lastkondensator (C12) und der Heizschaltung (11) verbunden ist, um eine Störung zwischen der Heizschaltung (11) und dem Lastkondensator (C12) zu reduzieren,
wobei die Heizschaltung (11) ein Dämpfungselement (R1), eine bidirektionale Schaltvorrichtung (1), ein zweites Stromspeicherelement (L1) und ein erstes Ladungsspeicherelement (C1) aufweist, wobei das Dämpfungselement (R1) und das zweite Stromspeicherelement (L1) in Reihe geschaltet sind, um eine erste Schaltung auszubilden, wobei die bidirektionale Schaltvorrichtung (1) und das erste Ladungsspeicherelement (C1) in Reihe geschaltet sind, um eine zweite Schaltung auszubilden, wobei ein Anschluss der ersten Schaltung mit einer positiven Elektrode der fahrzeuginternen Batterie (5) verbunden ist, wobei der andere Anschluss der ersten Schaltung mit einem Anschluss der zweiten Schaltung und einem Anschluss des ersten Stromspeicherelements (L11) verbunden ist, und wobei der andere Anschluss der zweiten Schaltung mit dem Lastkondensator (C12) und einer negativen Elektrode der fahrzeuginternen Batterie (5) verbunden ist, wobei das Dämpfungselement (R1) ein Widerstand ist, das erste Stromspeicherelement (L11) und das zweite Stromspeicherelement (L1) Induktoren sind und das erste Ladungsspeicherelement (C1) ein Kondensator ist;
ein Heizschaltungssteuermodul (100), das konfiguriert ist, um die Heizschaltung (11) zu steuern, um sie durch Steuern der bidirektionalen Schaltvorrichtung (1), so dass diese ein- oder ausgeschaltet wird, mit der fahrzeuginternen Batterie (5) zu verbinden oder von dieser zu trennen;
**dadurch gekennzeichnet, dass**
die Heizschaltung (11) weiterhin eine Energiesummierungseinheit (300) zum Summieren einer Energie in der Heizschaltung (11) und einer Energie in der fahrzeuginternen Batterie (5) nach Ausschalten der bidirektionalen Schaltvorrichtung (1) aus einem eingeschalteten Zustand aufweist und die Energiesummierungseinheit (300) eine Polaritätsumkehreinheit (102) zum Umkehren einer Spannungspolarität des ersten Ladungsspeicherelements (C1) nach Ausschalten der bidirektionalen Schaltvorrichtung (1) aus dem eingeschalteten Zustand aufweist.

2. Das elektrische Fahrzeugbetriebssteuersystem nach Anspruch 1, wobei das Dämpfungselement (R1) ein interner parasitärer Widerstand der fahrzeuginternen Batterie (5) ist und das zweite Stromspeicherelement (L1) ein interner parasitärer Induktor der fahrzeuginternen Batterie (5) ist.

3. Das elektrische Fahrzeugbetriebssteuersystem nach einem der Ansprüche 1-2, wobei die Heizschaltung (11) weiterhin eine Energieübertragungseinheit (400) zum Übertragen einer Energie in der Heizschaltung (11) zu einem Energiespeicherelement (500) nach Ausschalten der bidirektionalen Schaltvorrichtung (1) aus einem eingeschalteten Zustand aufweist, und die Energieübertragungseinheit (400) eine Einheit (103) zum Wiederaufladen mit elektrischer Energie zum Übertragen der Energie in der Heizschaltung (11) zum Energiespeicherelement (500) nach Ausschalten der bidirektionalen Schaltvorrichtung (1) aus dem eingeschalteten Zustand aufweist.

4. Das elektrische Fahrzeugbetriebssteuersystem nach einem der Ansprüche 1-3, wobei die Heizschaltung (11) weiterhin eine Energiesummierungs- und -übertragungseinheit (600) zum Übertragen eines Teils der Energie in der Heizschaltung (11) zu einem Energiespeicherelement (500) nach Ausschalten der bidirektionalen Schaltvorrichtung (1) aus einem eingeschalteten Zustand und zum anschließenden Summieren der verbleibenden Energie in der Heizschaltung (11) und einer Energie in der fahrzeuginternen Batterie (5) aufweist.

5. Das elektrische Fahrzeugbetriebssteuersystem nach Anspruch 4, wobei die Energiesummierungs- und -übertragungseinheit (600) eine Energiesummierungseinheit (300) und eine Energieübertragungseinheit (400) aufweist,
wobei die Energieübertragungseinheit (400) konfiguriert ist, um nach Ausschalten der bidirektionalen Schaltvorrichtung (1) aus dem eingeschalteten Zustand den Teil der Energie in der Heizschaltung (11) zu einem Energiespeicherelement (500) zu übertragen,
wobei die Energiesummierungseinheit (300) konfiguriert ist, um nach Übertragen des Teils der Energie durch die Energieübertragungseinheit (400) die verbleibende Energie in der Heizschaltung (11) und die Energie in der fahrzeuginternen Batterie (5) zu summieren,
wobei die Energieübertragungseinheit (400) die Einheit (103) zum Wiederaufladen mit elektrischer Energie zum Übertragen des Teils der Energie in der Heizschaltung (11) zum Energiespeicherelement (500) nach Ausschalten der bidirektionalen Schaltvorrichtung (1) aus dem eingeschalteten Zustand aufweist, und
wobei die Energiesummierungseinheit (300) die Polaritätsumkehreinheit (102) zum Umkehren der Spannungspolarität des ersten Ladungsspeicherelements (C1) nach Übertragen des Teils der Energie durch die Einheit (103) zum Wiederaufladen mit elektrischer Energie aufweist.

6. Das elektrische Fahrzeugbetriebssteuersystem nach einem der Ansprüche 1-5, wobei die Polaritätsumkehreinheit (102) aufweist:
ein drittes Stromspeicherelement (L2);
einen ersten Schalter (K9),
wobei das erste Ladungsspeicherelement (C1), das dritte Stromspeicherelement (L2) und der erste Schalter (K9) nacheinander in Reihe geschaltet sind, um einen Kreis auszubilden, und wobei das Heizschaltungssteuermodul (100) mit dem ersten Schalter (K9) verbunden ist, um die Spannungspolarität des ersten Ladungsspeicherelements (C1) durch Steuern des ersten Schalters (K9), so dass er eingeschaltet wird, umzukehren; und
ein erstes unidirektionales Halbleiterelement (D3), wobei das erste unidirektionale Halbleiterelement (D3) zwischen das erste Ladungsspeicherelement (C1) und das dritte Stromspeicherelement (L2) oder zwischen das dritte Stromspeicherelement (L2) und den ersten Schalter (K9) in Reihe geschaltet ist.

7. Das elektrische Fahrzeugbetriebssteuersystem nach einem der Ansprüche 4-6, wobei die Polaritätsumkehreinheit aufweist (102):
ein zweites Ladungsspeicherelement (C2);
ein erstes DC-DC-Modul (2), wobei das Heizschaltungssteuermodul (100) mit dem ersten DC-DC-Modul (2) verbunden ist, um durch Steuern des ersten DC-DC-Moduls (2) eine Energie im ersten Ladungsspeicherelement (C1) zum zweiten Ladungsspeicherelement (C2) zu übertragen und anschließend eine Energie im zweiten Ladungsspeicherelement (C2) umgekehrt zurück zum ersten Ladungsspeicherelement (C1) zu übertragen, um die Spannungspolarität des ersten Ladungsspeicherelements (C1) umzukehren;
wobei die Einheit (103) zum Wiederaufladen mit elektrischer Energie ein zweites DC-DC-Modul (3) aufweist, und wobei das Heizschaltungssteuermodul (100) mit dem zweiten DC-DC-Modul (3) verbunden ist, um durch Steuern des zweiten DC-DC-Moduls (3) eine Energie im ersten Ladungsspeicherelement (C1) zur fahrzeuginternen Batterie (5) zu übertragen; und
wobei die Energiesummierungs- und -übertragungseinheit (600) ein drittes DC-DC-Modul (4) aufweist, und wobei das Heizschaltungssteuermodul (100) mit dem dritten DC-DC-Modul (4) verbunden ist, um durch Steuern des dritten DC-DC-Moduls (4) einen Teil der Energie im ersten Ladungsspeicherelement (C1) zum Energiespeicherelement (500) zu übertragen und anschließend die verbleibende Energie im ersten Ladungsspeicherelement (C1) und die Energie in der fahrzeuginternen Batterie (5) zu summieren.

8. Das elektrische Fahrzeugbetriebssteuersystem nach einem der Ansprüche 1-7, weiterhin aufweisend:
eine Energiebegrenzungsschaltung zum Begrenzen eines Stroms, der von der Heizschaltung (11) zur fahrzeuginternen Batterie (5) fließt.

9. Das elektrische Fahrzeugbetriebssteuersystem nach Anspruch 8, wobei die bidirektionale Schaltvorrichtung (1) einen ersten unidirektionalen Zweig zum Realisieren eines Flusses einer Energie von der fahrzeuginternen Batterie (5) zur Heizschaltung (11) und einen zweiten unidirektionalen Zweig zum Realisieren eines Flusses einer Energie von der Heizschaltung (11) zur fahrzeuginternen Batterie (5) aufweist,
das Heizschaltungssteuermodul (100) mit dem ersten unidirektionalen Zweig oder dem zweiten unidirektionalen Zweig verbunden ist, um den verbundenen ersten unidirektionalen Zweig oder zweiten unidirektionalen Zweig zu steuern, so dass sie ein oder aus sind; und
wobei die Energiebegrenzungsschaltung (100) ein viertes Stromspeicherelement (L111), das mit dem zweiten unidirektionalen Zweig in Reihe geschaltet ist, aufweist.

10. Das elektrische Fahrzeugbetriebssteuersystem nach Anspruch 9, wobei die bidirektionale Schaltvorrichtung (1) einen zweiten Schalter (K6), ein zweites unidirektionales Halbleiterelement (D11) und ein drittes unidirektionales Halbleiterelement (D12) aufweist,
der zweite Schalter (K6) und das zweite unidirektionale Halbleiterelement (D11) in Reihe geschaltet sind, um den ersten unidirektionalen Zweig auszubilden, wobei das dritte unidirektionale Halbleiterelement (D12) den zweiten unidirektionalen Zweig ausbildet,
das Heizschaltungssteuermodul (100) mit dem zweiten Schalter (K6) verbunden ist, um durch Steuern des zweiten Schalters (K6), so dass er ein- oder ausgeschaltet wird, den ersten unidirektionalen Zweig zu steuern, so dass er ein oder aus ist,
das vierte Steuerspeicherelement (L111) mit dem dritten unidirektionalen Halbleiterelement (D12) in Reihe geschaltet ist; und
wobei die bidirektionale Schaltvorrichtung (1) weiterhin einen dritten Schalter (K7) im zweiten unidirektionalen Zweig aufweist, wobei der dritte Schalter (K7) mit dem dritten unidirektionalen Halbleiterelement (D12) in Reihe geschaltet ist, wobei das Heizschaltungssteuermodul (100) mit dem dritten Schalter (K7) verbunden ist, um durch Steuern des dritten Schalters (K7), so dass er ein- oder ausgeschaltet wird, den zweiten unidirektionalen Zweig zu steuern, so dass er ein oder aus ist, und wobei das vierte Stromspeicherelement (L111) zwischen das dritte unidirektionale Halbleiterelement (D12) und den dritten Schalter (K7) in Reihe geschaltet ist.

11. Das elektrisch Fahrzeugbetriebssteuersystem nach Anspruch 10, wobei die Heizschaltung (11) weiterhin ein viertes unidirektionales Halbleiterelement (D15), ein fünftes unidirektionales Halbleiterelement (D16), einen vierten Schalter (K10) und einen fünften Schalter (K11) aufweist,
eine Kathode des fünften unidirektionalen Halbleiterelements (D16) zwischen den dritten Schalter (K7) und das vierte Stromspeicherelement (L111) geschaltet ist, eine Anode des fünften unidirektionalen Halbleiterelements (D16) mit einem Ende des fünften Schalters (K11) verbunden ist und das andere Ende des fünften Schalters (K11) mit einer negativen Elektrode der fahrzeuginternen Batterie (5) verbunden ist;
eine Anode des vierten unidirektionalen Halbleiterelements (D15) zwischen das dritte unidirektionale Halbleiterelement (D12) und das vierte Stromspeicherelement (L111) geschaltet ist, eine Kathode des vierten unidirektionalen Halbleiterelements (D15) mit einem Ende des vierten Schalters (K10) verbunden ist und das andere Ende des vierten Schalters (K10) mit der negativen Elektrode der fahrzeuginternen Batterie (5) verbunden ist;
das Heizschaltungssteuermodul (100) mit dem vierten Schalter (K10) und dem fünften Schalter (K11) verbunden ist, um jeweils den vierten Schalter (K10) und den fünften Schalter (K11) zu steuern, so dass sie ein- oder ausgeschaltet werden;
wobei das Heizschaltungssteuermodul (100) konfiguriert ist, um:
den zweiten Schalter (K6) und den dritten Schalter (K7) zu steuern, so dass sie eingeschaltet werden, um zu ermöglichen, dass eine Energie von der fahrzeuginternen Batterie (5) zum ersten Ladungsspeicherelement (C1) fließt und vom ersten Ladungsspeicherelement (C1) zur fahrzeuginternen Batterie (5) fließt;
den dritten Schalter (K7) auszuschalten und den fünften Schalter (K11) einzuschalten, wenn eine am ersten Ladungsspeicherelement (C1) anliegende Spannung höher als eine erste vorbestimmte Spannung der fahrzeuginternen Batterie (5) ist;
den fünften Schalter (K11) auszuschalten und den dritten Schalter (K7) und den vierten Schalter (K10) einzuschalten, wenn ein Strom, der durch das vierte Stromspeicherelement (L111) fließt, null ist, um zu ermöglichen, dass sich die Spannungspolarität des ersten Ladungsspeicherelements (C1) umkehrt; und
den zweiten Schalter (K6) und den dritten Schalter (K7) zu steuern, so dass sie eingeschaltet werden, um zu ermöglichen, dass eine Energie von der fahrzeuginternen Batterie (5) zum ersten Ladungsspeicherelement (C1) fließt und vom ersten Ladungsspeicherelement (C1) zur fahrzeuginternen Batterie (5) fließt;
den dritten Schalter (K6) auszuschalten und den fünften Schalter (K11) einzuschalten, wenn eine am ersten Ladungsspeicherelement (C1) anliegende Spannung niedriger als eine oder gleich einer zweiten vorbestimmten Spannung der fahrzeuginternen Batterie (5) ist;
den fünften Schalter (K11) auszuschalten und den dritten Schalter (K7) und den vierten Schalter (K10) einzuschalten, wenn ein Strom, der durch das vierte Stromspeicherelement (L111) fließt, einen zweiten vorbestimmten Strom erreicht;
den vierten Schalter (K10) auszuschalten, wenn der Strom, der durch das vierte Stromspeicherelement (L111) fließt, einen ersten vorbestimmten Strom erreicht, um zu ermöglichen, dass eine Energie im vierten Stromspeicherelement (L111) zur fahrzeuginternen Batterie (5) fließt; und
den dritten Schalter (K7) und den vierten Schalter (K10) einzuschalten, wenn der Strom, der durch das vierte Stromspeicherelement (L111) fließt, null ist, um zu ermöglichen, dass sich die Spannungspolarität des ersten Ladungsspeicherelements (C1) umkehrt.

## Revendications

1. Un système de commande de déplacement de véhicule électrique, comprenant :
un circuit de chauffage (11) connecté à une batterie embarquée (5) pour former une boucle de chauffage afin de chauffer la batterie embarquée (5), un condensateur de charge (C12) ; et un premier élément de stockage de courant (L11) connecté au condensateur de charge (C12) et le circuit de chauffage (11), respectivement, pour réduire une interférence entre le circuit de chauffage (11) et le condensateur de charge (C12),
le circuit de chauffage (11) comprenant un élément d'amortissement (R1), un dispositif de commutation (1) bidirectionnel, un deuxième élément de stockage de courant (L1) et un premier élément de stockage de charge (C1), l'élément d'amortissement (R1) et le deuxième élément de stockage de courant (L1) étant connectés en série pour former un premier circuit, le dispositif de commutation (1) bidirectionnel et le premier élément de stockage de charge (C1) étant connectés en série pour former un deuxième circuit, une borne du premier circuit étant connectée à une électrode positive de la batterie embarquée (5), l'autre borne du premier circuit étant connectée à une borne du deuxième circuit et une borne du premier élément de stockage de courant (L11), et l'autre borne du deuxième circuit étant connectée au condensateur de charge (C12) et une électrode négative de la batterie embarquée (5), l'élément d'amortissement (R1) étant une résistance, le premier élément de stockage de courant (L11) et le deuxième élément de stockage de courant (L1) étant des bobines d'inductance, et le premier élément de stockage de charge (C1) étant un condensateur ;
un module de commande de circuit de chauffage (100) configuré pour commander le circuit de chauffage (11) afin de le connecter à la batterie embarquée (5) ou de l'en déconnecter en commandant le dispositif de commutation (1) bidirectionnel afin de l'allumer ou l'éteindre ;
**caractérisé en ce que**
le circuit de chauffage (11) comprend en outre une unité d'addition d'énergie (300) pour additionner une énergie se trouvant dans le circuit de chauffage (11) et une énergie se trouvant dans la batterie embarquée (5) après que le dispositif de commutation (1) bidirectionnel ait été éteint à partir d'un état allumé, l'unité d'addition d'énergie (300) comprenant une unité d'inversion de polarité (102) pour inverser une polarité de tension du premier élément de stockage de charge (C1) après que le dispositif de commutation (1) bidirectionnel ait été éteint à partir de l'état allumé.

2. Le système de commande de déplacement de véhicule électrique selon la revendication 1, dans lequel l'élément d'amortissement (R1) est une résistance parasite interne de la batterie embarquée (5) et le deuxième élément de stockage de courant (L1) est une bobine d'inductance parasite interne de la batterie embarquée (5).

3. Le système de commande de déplacement de véhicule électrique selon l'une des revendications 1-2, dans lequel le circuit de chauffage (11) comprend en outre une unité de transfert d'énergie (400) pour transférer une énergie se trouvant dans le circuit de chauffage (11) à un élément de stockage d'énergie (500) après que le dispositif de commutation (1) bidirectionnel ait été éteint à partir d'un état allumé, l'unité de transfert d'énergie (400) comprenant une unité de réalimentation en énergie électrique (103) pour transférer l'énergie se trouvant dans le circuit de chauffage (11) à l'élément de stockage d'énergie (500) après que le dispositif de commutation (1) bidirectionnel ait été éteint à partir de l'état allumé.

4. Le système de commande de déplacement de véhicule électrique selon l'une des revendications 1-3, dans lequel le circuit de chauffage (11) comprend en outre une unité d'addition et de transfert d'énergie (600) pour transférer une partie de l'énergie se trouvant dans le circuit de chauffage (11) à un élément de stockage d'énergie (500) après que le dispositif de commutation (1) bidirectionnel ait été éteint à partir d'un état allumé, et pour additionner ensuite l'énergie restante dans le circuit de chauffage (11) et une énergie se trouvant dans la batterie embarquée (5).

5. Le système de commande de déplacement de véhicule électrique selon la revendication 4, dans lequel
l'unité d'addition et de transfert d'énergie (600) comprend une unité d'addition d'énergie (300) et une unité de transfert d'énergie (400),
l'unité de transfert d'énergie (400) est configurée pour transférer la partie de l'énergie se trouvant dans le circuit de chauffage (11) à un élément de stockage d'énergie (500) après que le dispositif de commutation (1) bidirectionnel ait été éteint à partir de l'état allumé,
l'unité d'addition d'énergie (300) est configurée pour additionner l'énergie restante dans le circuit de chauffage (11) et l'énergie se trouvant dans la batterie embarquée (5) après que la partie de l'énergie ait été transférée par l'unité de transfert d'énergie (400),
l'unité de transfert d'énergie (400) comprend l'unité de réalimentation en énergie électrique (103) pour transférer la partie de l'énergie se trouvant dans le circuit de chauffage (11) à l'élément de stockage d'énergie (500) après que le dispositif de commutation (1) bidirectionnel ait été éteint à partir de l'état allumé, et
l'unité d'addition d'énergie (300) comprend l'unité d'inversion de polarité (102) pour inverser la polarité de tension du premier élément de stockage de charge (C1) après que la partie de l'énergie ait été transférée par l'unité de réalimentation en énergie électrique (103).

6. Le système de commande de déplacement de véhicule électrique selon l'une des revendications 1-5, dans lequel l'unité d'inversion de polarité (102) comprend :
un troisième élément de stockage de courant (L2) ;
un premier commutateur (K9),
le premier élément de stockage de charge (C1), le troisième élément de stockage de courant (L2) et le premier commutateur (K9) étant connectés en série en séquence pour former une boucle, et le module de commutation de circuit de chauffage (100) étant connecté au premier commutateur (K9) pour inverser la polarité de tension du premier élément de stockage de charge (C1) en commandant le premier commutateur (K9) afin de l'allumer, et
un premier élément à semi-conducteur (D3) unidirectionnel, le premier élément à semi-conducteur (D3) unidirectionnel étant connecté en série entre le premier élément de stockage de charge (C1) et le troisième élément de stockage de courant (L2) ou entre le troisième élément de stockage de courant (L2) et le premier commutateur (K9).

7. Le système de commande de déplacement de véhicule électrique selon l'une des revendications 4-6, dans lequel l'unité d'inversion de polarité (102) comprend :
un deuxième élément de stockage de charge (C2) ;
un premier module CC-CC (2), le module de commande de circuit de chauffage (100) étant connecté au premier module CC-CC (2) pour transférer une énergie se trouvant dans le premier élément de stockage de charge (C1) au deuxième élément de stockage de charge (C2), et pour ensuite retransférer inversement une énergie se trouvant dans le deuxième élément de stockage de charge (C2) au premier élément de stockage de charge (C1) en commandant le premier module CC-CC (2) afin d'inverser la polarité de tension du premier élément de stockage de charge (C1) ;
l'unité de réalimentation en énergie électrique (103) comprenant un deuxième module CC-CC (3), et le module de commande de circuit de chauffage (100) étant connecté au deuxième module CC-CC (3) pour transférer une énergie se trouvant dans le premier élément de stockage de charge (C1) à la batterie embarquée (5) en commandant le deuxième module CC-CC (3) ; et
l'unité d'addition et de transfert d'énergie (600) comprenant un troisième module CC-CC (4), et le module de commande de circuit de chauffage (100) étant connecté au troisième module CC-CC (4) pour transférer une partie de l'énergie se trouvant dans le premier élément de stockage de charge (C1) à l'élément de stockage d'énergie (500), et pour additionner ensuite l'énergie restante dans le premier élément de stockage de charge (C1) et l'énergie se trouvant dans la batterie embarquée (5) en commandant le troisième module CC-CC (4).

8. Le système de commande de déplacement de véhicule électrique selon l'une des revendications 1-7, comprenant en outre :
un circuit de limitation d'énergie pour limiter un courant s'écoulant depuis le circuit de chauffage (11) à la batterie embarquée (5).

9. Le système de commande de déplacement de véhicule électrique selon la revendication 8, dans lequel
le dispositif de commutation (1) bidirectionnel comprend une première dérivation unidirectionnelle pour réaliser un écoulement d'une énergie depuis la batterie embarquée (5) au circuit de chauffage (11), et une seconde dérivation unidirectionnelle pour réaliser un écoulement d'une énergie depuis le circuit de chauffage (11) à la batterie embarquée (5),
le module de commande de circuit de chauffage (100) est connecté à la première dérivation unidirectionnelle ou la seconde dérivation unidirectionnelle pour commander la première dérivation unidirectionnelle ou la seconde dérivation unidirectionnelle connectées afin qu'elles soient allumées ou éteintes, et
le circuit de limitation d'énergie (100) comprend un quatrième élément de stockage de courant (L111) connecté en série dans la seconde dérivation unidirectionnelle.

10. Le système de commande de déplacement de véhicule électrique selon la revendication 9, dans lequel
le dispositif de commutation (1) bidirectionnel comprend un deuxième commutateur (K6), un deuxième élément à semi-conducteur (D11) unidirectionnel et un troisième élément à semi-conducteur (D12) unidirectionnel,
le deuxième commutateur (K6) et le deuxième élément à semi-conducteur (D11) unidirectionnel sont connectés en série pour former la première dérivation unidirectionnelle, le troisième élément à semi-conducteur (D12) unidirectionnel formant la seconde dérivation unidirectionnelle,
le module de commande de circuit de chauffage (100) est connecté au deuxième commutateur (K6) pour commander la première dérivation unidirectionnelle afin qu'elle soit allumée ou éteinte en commandant le deuxième commutateur (K6) afin de l'allumer ou l'éteindre,
le quatrième élément de stockage de courant (L111) est connecté en série au troisième élément à semi-conducteur (D12) unidirectionnel ; et
le dispositif de commutation (1) bidirectionnel comprend en outre un troisième commutateur (K7) dans la seconde dérivation unidirectionnelle, le troisième commutateur (K7) est connecté en série au troisième élément à semi-conducteur (D12) unidirectionnel, le module de commande de circuit de chauffage (100) est connecté au troisième commutateur (K7) pour commander la seconde dérivation unidirectionnelle afin qu'elle soit allumée ou éteinte en commandant le troisième commutateur (K7) afin de l'allumer ou l'éteindre, et le quatrième élément de stockage de courant (L111) est connecté en série entre le troisième élément à semi-conducteur (D12) unidirectionnel et le troisième commutateur (K7).

11. Le système de commande de déplacement de véhicule électrique selon la revendication 10, dans lequel
le circuit de chauffage (11) comprend en outre un quatrième élément à semi-conducteur (D15) unidirectionnel, un cinquième élément à semi-conducteur (D16) unidirectionnel, un quatrième commutateur (K10), et un cinquième commutateur (K11),
une cathode du cinquième élément à semi-conducteur (D16) unidirectionnel est connectée entre le troisième commutateur (K7) et le quatrième élément de stockage de courant (L111), une anode du cinquième élément à semi-conducteur (D16) unidirectionnel est connectée à l'une extrémité du cinquième commutateur (K11), et l'autre extrémité du cinquième commutateur (K11) est connectée à une électrode négative de la batterie embarquée (5) ;
une anode du quatrième élément à semi-conducteur (D15) unidirectionnel est connectée entre le troisième élément à semi-conducteur (D12) unidirectionnel et le quatrième élément de stockage de courant (L111), une cathode du quatrième élément à semi-conducteur (D15) unidirectionnel est connectée à l'une extrémité du quatrième commutateur (K10), et l'autre extrémité du quatrième commutateur (K10) est connectée à l'électrode négative de la batterie embarquée (5) ;
le module de commande de circuit de chauffage (100) est connecté au quatrième commutateur (K10) et le cinquième commutateur (K11), respectivement, pour commander le quatrième commutateur (K10) et le cinquième commutateur (K11) afin de l'allumer ou l'éteindre ;
le module de commande de circuit de chauffage (100) étant configuré pour :
commander le deuxième commutateur (K6) et le troisième commutateur (K7) afin de l'allumer afin de permettre à une énergie de s'écouler depuis la batterie embarquée (5) au premier élément de stockage de charge (C1) et de s'écouler depuis le premier élément de stockage de charge (C1) à la batterie embarquée (5) ;
éteindre le troisième commutateur (K7) et allumer le cinquième commutateur (K11) lorsqu'une tension appliquée au premier élément de stockage de charge (C1) est supérieure à une première tension prédéterminée de la batterie embarquée (5) ;
éteindre le cinquième commutateur (K11) et allumer le troisième commutateur (K7) et le quatrième commutateur (K10) lorsqu'un courant s'écoulant par le quatrième élément de stockage de courant (L111) est zéro afin de permettre à la polarité de tension du premier élément de stockage de charge (C1) de s'inverser ; et
commander le deuxième commutateur (K6) et le troisième commutateur (K7) afin de l'allumer afin de permettre à une énergie de s'écouler depuis la batterie embarquée (5) au premier élément de stockage de charge (C1) et de s'écouler depuis le premier élément de stockage de charge (C1) à la batterie embarquée (5) ;
éteindre le troisième commutateur (K6) et allumer le cinquième commutateur (K11) lorsqu'une tension appliquée au premier élément de stockage de charge (C1) est inférieure ou égale à une deuxième tension prédéterminée de la batterie embarquée (5) ;
éteindre le cinquième commutateur (K11) et allumer le troisième commutateur (K7) et le quatrième commutateur (K10) lorsqu'un courant s'écoulant par le quatrième élément de stockage de courant (L111) atteint un deuxième courant prédéterminé ;
éteindre le quatrième commutateur (K10) lorsque le courant s'écoulant par le quatrième élément de stockage de courant (L111) atteint un premier courant prédéterminé afin de permettre à une énergie se trouvant dans le quatrième élément de stockage de courant (L111) de s'écouler à la batterie embarquée (5) ; et
allumer le troisième commutateur (K7) et le quatrième commutateur (K10) lorsque le courant s'écoulant par le quatrième élément de stockage de courant (L111) est zéro afin de permettre à la polarité de tension du premier élément de stockage de charge (1) de s'inverser.
